# EUROPEAN PATENT SPECIFICATION

(11) **EP 2 556 947 B1**
(45) Date of publication and mention of the grant of the patent: **21.04.2021**
(21) Application number: 12180188.0
(22) Date of filing: 10.08.2012
(51) Int. Cl.: B29D 99/00, B64C 1/06

(54) **Vertical laminate noodle for high capacity pull-off for a composite stringer**
Vertikale Laminatnudel für Hochleistungsabzug für einen Verbundstringer
Noodle stratifié vertical de décrochage de haute capacité pour un longeron composite

(30) Priority: 10.08.2011 US 201113206946
(43) Date of publication of application: 13.02.2013
(73) Proprietor: The Boeing Company, Chicago, IL 60606-1596 (US)
(72) Inventor: Malmurugan, Kamaraj, Kent, WI 98031 (US); Matheson, Donald Paul, Redmond, WA 98052 (US)
(74) Representative: Howson, Richard Giles Bentham

(56) References cited:
- EP-A2- 0 396 281
- WO-A2-01/62495
- US-A1- 2006 188 696

## Description

### BACKGROUND INFORMATION

### 1. Field:

The present disclosure relates generally to aircraft and, in particular, to aircraft structures. Still more particularly, the present disclosure relates to stringers and other structural designs for an aircraft.

### 2. Background:

Aircraft are being designed and manufactured with greater and greater percentages of composite materials. Some aircraft may have more than 50 percent of their primary structures made from composite materials. Composite materials may be used in aircraft to decrease the weight of the aircraft. This decreased weight may improve payload capacities and fuel efficiencies. Further, composite materials may provide longer service life for various components in an aircraft.

Composite materials may be tough, light-weight materials created by combining two or more dissimilar components. For example, a composite material may include fibers and resins. The fibers and resins may be combined to form a cured composite material.

Further, by using composite materials, portions of an aircraft may be created in larger pieces or sections. For example, a fuselage in an aircraft may be created in cylindrical sections that may be put together to form the fuselage of the aircraft. Other examples may include, without limitation, wing sections joined to form a wing or stabilizer sections joined to form a stabilizer.

A stringer is an example of a component that may be manufactured from composite materials. A stringer is an elongate member and is configured for attachment to another structure, such as a panel. For example, a stringer may be attached to a skin panel for an aircraft. This skin panel may be used in a wing, fuselage, or other component in the aircraft. The stringer also may help carry and/or transfer loads. For example, a stringer may transfer a load from a skin panel to another structure. This other structure may be, for example, a frame or a rib.

Designing stringers with a desired weight and performance characteristics may be challenging. For example, a stringer with desired performance characteristics may be more complex or weigh more than desired. With increased complexity, time and cost for manufacturing a stringer also may increase.

If the stringer has a desired weight, performance characteristics may be such that additional stringers may be required where a single stringer is desired.

Therefore, it would be advantageous to have a method and apparatus that takes into account at least some of the issues discussed above, as well as possibly other issues.

US 2006/188696 describes a composite member with a reinforced rampdown or taper, having a composite noodle bonded to an end of a core to fill the taper.

WO 01/62495 describes a laminated composite (multi-ply) radius filler including a plurality of woven fabric reinforced plies cut to fill a radius gap (including, if appropriate, intentional overfill) to increase absolute strength, to increase specific strength, or to reduce cost by reducing cracking and distortion in the radius of a composite assembly.

EP 0396281 describes a method for producing a component having a wedge-shaped cross section from fibre reinforced plastic material comprises laying a plurality of sheets of such material in a stack with adjacent sheets staggered in a widthwise direction, cutting the stack longitudinally to form two part stacks, joining the part stacks so that the cut edges form a common edge of the joined part stacks and consolidating and curing the assembly to form the component.

### SUMMARY

According to the invention, there is provided a structural system as defined in claim 1.

In one advantageous example, an apparatus comprises a composite elongate member, a channel, and a number of composite structures. The composite elongate member has a side configured for attachment to a surface of a structure. The channel is on the side and extends along a length of the composite elongate member. The number of composite structures is configured for placement in the channel and configured to attach a portion of the side of the composite elongate member to the structure. The number of composite structures has layers oriented substantially perpendicular to the surface of the structure. The number of composite structures is configured to increase a capacity of the composite elongate member to withstand forces that pull the composite elongate member away from the structure.

In another advantageous example, a structural system for an aircraft comprises a composite elongate member and a filler structure. The composite elongate member has a base section and a vertical section in which the vertical section extends away from the base section in a direction substantially perpendicular to the base section to form a T-shape. The vertical section meets the base section at a first location of the vertical section and a second location of the vertical section in which the first location has a first curved shape and the second location has a second curved shape. The first curved shape and the second curved shape have a substantially same radius. A channel is formed between the first location and the second location and extends along a length of the composite elongate member. The composite elongate member has a first Young's modulus. The filler structure comprises a number of composite structures configured to conform to a shape of the channel. The number of composite structures has a second Young's modulus that is within a desired range from the first Young's modulus. The number of composite structures has layers oriented substantially perpendicular to a surface of the base section. The number of composite structures is configured to increase a capacity of the composite elongate member to withstand forces that pull the composite elongate member away from the base section.

In yet another advantageous example, a method for increasing a pull-off capacity for a composite elongate member is provided. An aircraft is operated. Responsive to operation of the aircraft, forces configured to pull the composite elongate member away from a structure attached to a side of the composite elongate member are generated. A channel extends along a length of the composite elongate member on the side of the composite elongate member attached to the structure. A capacity of the composite elongate member to withstand the forces that pull the composite elongate member away from the structure is increased using a number of composite structures in the channel having layers oriented substantially perpendicular to a surface of the structure. The number of composite structures is configured to attach a portion of the side of the composite elongate member to the structure.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel and inventive features believed characteristic of the advantageous embodiments of the invention are set forth in the appended claims.

The advantageous embodiments, however, as well as a preferred mode of use, further objectives, and advantages thereof will best be understood by reference to the following detailed description of an advantageous example of the present disclosure when read in conjunction with the accompanying drawings, wherein:
**Figure 1** is an illustration of an aircraft manufacturing and service method in accordance with an advantageous example;
**Figure 2** is an illustration of an aircraft in which an advantageous example may be implemented;
**Figure 3** is an illustration of a structural system in accordance with an advantageous example;
**Figure 4** is an illustration of a perspective view of a structural system in accordance with an advantageous example;
**Figure 5** is an illustration of a cross-sectional view of a structural system in accordance with an advantageous example;
**Figure 6** is an illustration of a noodle in accordance with an advantageous example;
**Figure 7** is an illustration of a table of values for characteristics for composite layers in accordance with an advantageous example;
**Figure 8** is an illustration of a table of values for characteristics of composite layers in accordance with an advantageous example;
**Figure 9** is an illustration of a structural system in a wing in accordance with an advantageous example;
**Figure 10** is an illustration of a structural system in a wing in accordance with an advantageous example;
**Figures 11-14** are illustrations of a structural system during the different stages for forming the structural system in accordance with an advantageous example;
**Figures 15-17** are illustrations of panels from which composite structures for noodles are formed in accordance with an advantageous example;
**Figure 18** is an illustration of a filler structure in the form of a block diagram in accordance with an advantageous example;
**Figure 19** is an illustration of a perspective view of a structural system in accordance with an advantageous example;
**Figure 20** is an illustration of panels from which composite structures for noodles are formed in accordance with an advantageous example;
**Figure 21** is an illustration of a laminate for a noodle in accordance with an advantageous example;
**Figure 22** is an illustration of a filler structure in the form of a block diagram in accordance with an advantageous example;
**Figure 23** is an illustration of a front view of a structural system in accordance with an advantageous example;
**Figures 24A** **and** **24B** are is an illustration of a table of widths and orientation angles for composite layers in a noodle in accordance with an advantageous example;
**Figure 25** is an illustration of a flowchart of a process for increasing a pull-off capacity for a composite elongate member in accordance with an advantageous example;
**Figure 26** is an illustration of a flowchart of a process for forming a structural system in accordance with an advantageous example; and
**Figure 27** is an illustration of a flowchart of a process for forming a filler structure in accordance with an advantageous example.

### DETAILED DESCRIPTION

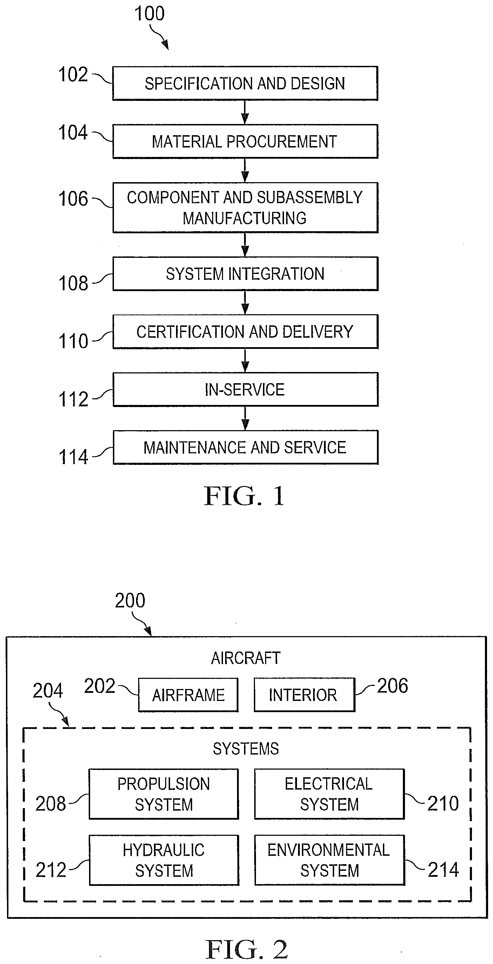

Referring more particularly to the drawings, embodiments of the disclosure may be described in the context of aircraft manufacturing and service method **100** as shown in **Figure 1** and aircraft **200** as shown in **Figure 2****.** Turning first to **Figure 1****,** an illustration of an aircraft manufacturing and service method is depicted in accordance with an advantageous example. During pre-production, aircraft manufacturing and service method **100** may include specification and design **102** of aircraft **200** in **Figure 2** and material procurement **104.**

During production, component and subassembly manufacturing **106** and system integration **108** of aircraft **200** takes place. Thereafter, aircraft **200** may go through certification and delivery **110** in order to be placed in-service **112.** While in-service **112** by a customer, aircraft **200** is scheduled for routine maintenance and service **114,** which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and majorsystem subcontractors; a third party may include, without limitation, any number of vendors, subcontractors, and suppliers; and an operator may be an airline, a leasing company, a military entity, a service organization, and so on.

With reference now to **Figure 2****,** an illustration of an aircraft is depicted in which an advantageous example may be implemented. In this example, aircraft **200** is produced by aircraft manufacturing and service method **100** in **Figure 1** and may include airframe **202** with plurality of systems **204** and interior **206.** Examples of systems **204** include one or more of propulsion system **208,** electrical system **210,** hydraulic system **212,** and environmental system **214.** Any number of other systems may be included. Although an aerospace example is shown, different advantageous embodiments may be applied to other industries, such as the automotive industry.

Apparatuses and methods embodied herein may be employed during at least one of the stages of aircraft manufacturing and service method **100.** As used herein, the phrase "at least one of", when used with a list of items, means that different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C.

In one illustrative example, components or subassemblies produced in component and subassembly manufacturing **106** in **Figure 1** may be fabricated or manufactured in a manner similar to components or subassemblies produced while aircraft **200** is in-service **112** in **Figure 1****.** As yet another example, a number of apparatus embodiments, method embodiments, or a combination thereof may be utilized during production stages, such as component and subassembly manufacturing **106** and system integration **108** in **Figure 1****.** A number, when referring to items, means one or more items. For example, a number of apparatus embodiments is one or more apparatus embodiments. A number of apparatus embodiments, method embodiments, or a combination thereof may be utilized while aircraft **200** is in-service **112** and/or during maintenance and service **114** in **Figure 1****.** The use of a number of the different advantageous embodiments may substantially expedite the assembly of and/or reduce the cost of aircraft **200.**

The different advantageous embodiments recognize and take into account a number of different considerations. For example, the different advantageous embodiments recognize and take into account that the current design of stringers employs the use of composite materials referred to as noodles. A noodle is a composite material that may be placed in an area or channel extending along a length of the stringer or other type of elongate member.

The different advantageous embodiments recognize and take into account that currently, these noodles are designed to ease in manufacturing stringers. The different advantageous embodiments recognize and take into account that different characteristics or parameters about the noodle may not match characteristics or parameters in the rest of the stringer with this type of goal in mind.

The different advantageous embodiments recognize and take into account that this type of design of the noodle in the stringer may reduce desired performance characteristics, such as the amount of force needed to pull the stringer away from a skin panel.

Therefore, the different advantageous embodiments provide a method and apparatus for a stringer that has a greater ability to withstand forces that may pull the stringer away from another structure to which the stringer is attached. The different advantageous embodiments recognize and take into account that an advantageous embodiment may be applied to any type of elongate member having a base in which a noodle is present.

In one advantageous example, an apparatus comprises a composite elongate member, a channel, and a number of composite structures. The composite elongate member has a side configured for attachment to a structure. The channel is on the side of the composite elongate member and extends along a length of the composite elongate member. The number of composite structures is configured for placement in the channel and to attach a portion of the side of the composite elongate member to the structure. The number of composite structures is configured to increase a capacity of the composite elongate member to withstand forces that pull the composite elongate member away from the structure.

In another advantageous example, an apparatus comprises a composite elongate member, a channel, and a number of composite structures. The composite elongate member has a side configured for attachment to a structure. The channel is on the side and extends along a length of the composite elongate member. The number of composite structures is configured for placement in the channel and configured to attach a portion of the side of the composite elongate member to the structure. The number of composite structures has layers oriented substantially perpendicular to a surface of the structure configured to increase a capacity of the composite elongate member to withstand forces that pull the composite elongate member away from the structure.

In yet another advantageous example, an apparatus comprises a composite elongate member, a channel, and a number of composite structures. The composite elongate member has a side configured for attachment to a structure. The channel is on the side and extends along a length of the composite elongate member. The number of composite structures is configured for placement in the channel and configured to attach a portion of the side of the composite elongate member to the structure. A composite structure in the number of composite structures comprises layers having different orientations selected to increase a capacity of the composite elongate member to withstand forces that pull the composite elongate member away from the structure.

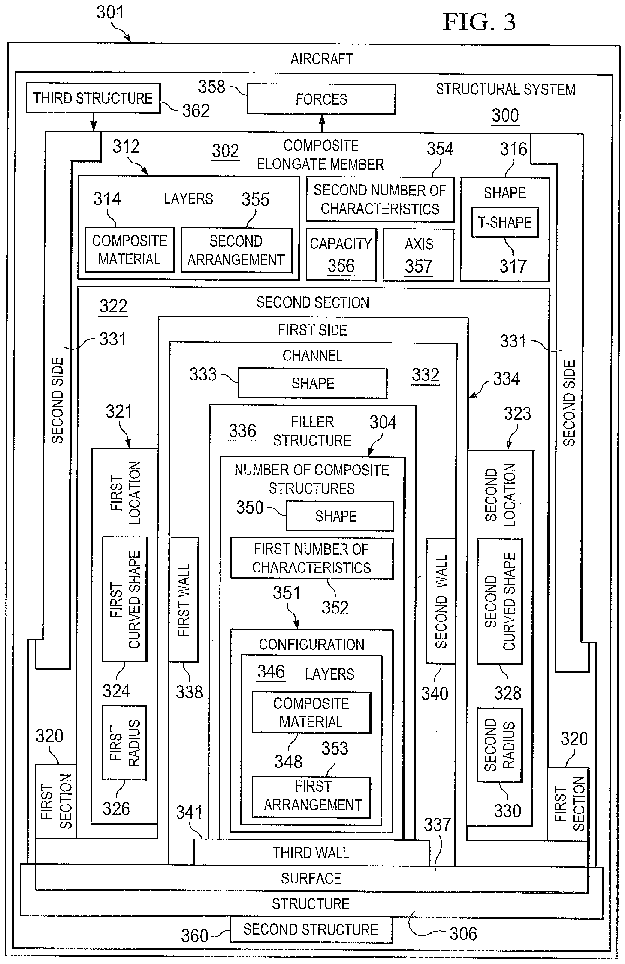

With reference now to **Figure 3****,** an illustration of a structural system is depicted in accordance with an advantageous example. In these illustrative examples, structural system **300** is depicted in block form. Structural system **300** is located in aircraft **301** in these illustrative examples. As depicted, structural system **300** comprises composite elongate member **302,** number of composite structures **304,** and structure **306.**

In these depicted examples, composite elongate member **302** is formed from layers **312** of composite material **314.** For example, layers **312** of composite material **314** are laid up and shaped into shape **316** for composite elongate member **302.** Shape **316** may be T-shape **317** in these illustrative examples.

As depicted, T-shape **317** for composite elongate member **302** is formed by first section **320** and second section **322** of composite elongate member **302.** In these illustrative examples, first section **320** may be referred to as a base section, and second section **322** may be referred to as a vertical section. First section **320** and second section **322** may be part of the same structure in these examples. Of course, in other illustrative examples, first section **320** and second section **322** may be formed from different structures.

Second section **322** is positioned substantially perpendicular to first section **320** to form T-shape **317** for composite elongate member **302.** In particular, second section **322** is the portion of composite elongate member **302** that extends away from first section **320** in a direction that is substantially perpendicular to first section **320.**

In these illustrative examples, first section **320** is substantially planar. Further, first section **320** is a discontinuous section. In particular, first section **320** may be discontinuous where second section **322** meets first section **320.**

Second section **322** meets first section **320** at first location **321** and second location **323** of second section **322.** First location **321** of second section **322** has first curved shape **324** with first radius **326.** Second location **323** of second section **322** has second curved shape **328** with second radius **330.**

First radius **326** is a radius for a circle that substantially fits first curved shape **324.** Second radius **330** is a radius for a circle that substantially fits second curved shape **328.** In these illustrative examples, first radius **326** may be substantially equal to second radius **330.**

First section **320** and second section **322** are positioned relative to each other to form channel **332.** In particular, channel **332** is formed between first location **321** and second location **323** of second section **322.** First radius **326** of first curved shape **324** for first location **321** and second radius **330** of second curved shape **328** for second location **323** determine shape **333** of channel **332.**

In these illustrative examples, channel **332** is formed at first side **334** of composite elongate member **302.** Channel **332** extends along a length of composite elongate member **302** in these examples. Composite elongate member **302** also has second side **331** opposite to first side **334.**

First side **334** may be, for example, a base side for both first section **320** and second section **322.** First side **334** is configured for attachment to structure **306.** Structure **306** may be, for example, without limitation, a skin panel, a rib, a spar, a base charge, a base plate, and/or some other suitable type of structure.

In one illustrative example, first side **334** of first section **320** of composite elongate member **302** is substantially planar. Structure **306** may be attached to first side **334** of first section **320** such that surface **337** of structure **306** directly contacts first side **334** of first section **320** in this illustrative example.

In these illustrative examples, a first component, such as structure **306,** may be attached to a second component, such as composite elongate member **302,** in a number of different ways. For example, a first component may be attached to a second component by bonding, curing, fastening, gluing, connecting, and/or attaching in some other suitable manner the two components to each other.

First side **334** of second section **322** at first location **321** and second location **323** forms first wall **338** and second wall **340** of channel **332.** In this manner, first side **334** of second section **322** at first location **321** and second location **323** may not directly contact surface **337** of structure **306** when structure **306** is attached to composite elongate member **302.** Further, when attached to composite elongate member **302,** surface **337** of structure **306** forms third wall **341.**

Number of composite structures **304** may be placed into channel **332.** Number of composite structures **304** may be comprised of layers **346** of composite material **348.** As depicted, number of composite structures **304** has shape **350** that substantially conforms to shape **333** of channel **332.** Number of composite structures **304** forms filler structure **336** for channel **332.** Filler structure **336** may be referred to as a noodle in these illustrative examples. Each of number of composite structures **304** is a segment of filler structure **336.**

For example, number of composite structures **304** may comprise a base segment, a top segment, and a set of intermediate segments located between the base segment and the top segment. As used herein, a "set of items" means zero or more items. For example, a set of intermediate segments may be an empty set or null set.

In these illustrative examples, number of composite structures **304** has first number of characteristics **352** that substantially match second number of characteristics **354** for composite elongate member **302.** First number of characteristics **352** and second number of characteristics **354** may comprise, for example, without limitation, at least one of a coefficient of thermal expansion, a Young's modulus, and other suitable characteristics.

As one illustrative example, layers **346** for number of composite structures **304** may have configuration **351.** Configuration **351** for layers **346** is selected such that first number of characteristics **352** for number of composite structures **304** substantially matches second number of characteristics **354** for composite elongate member **302.** For example, with configuration **351,** a value for a Young's modulus for number of composite structures **304** may be within a desired range from a value for a Young's module for composite elongate member **302.**

Further, layers **346** for number of composite structures **304** may have first arrangement **353** that is substantially equal to second arrangement **355** for layers **312** for composite elongate member **302.** First arrangement **353** for layers **346** of number of composite structures 304 is an arrangement of layers **346** relative to axis **357** through composite elongate member **302.** In particular, first arrangement **353** for layers **346** is an arrangement of fibers in layers **346** relative to axis **357** through composite elongate member **302.**

As one illustrative example, first arrangement **353** may comprise about 50 percent of layers **346** arranged about 0 degrees relative to axis **357,** about 40 percent of layers **346** arranged about 45 degrees relative to axis **357,** and about 10 percent of layers **346** arranged about 90 degrees relative to axis **357.** In this illustrative example, second arrangement **355** for layers **312** of composite elongate member **302** may have substantially the same percentages of layers **312** arranged substantially the same as first arrangement **353.**

Number of composite structures **304** is configured to attach structure **306** to composite elongate member **302.** More specifically, number of composite structures **304** attaches a portion of surface **337** of structure **306** to the portions of first side **334** at first location **321** and second location **323** of second section **322** for composite elongate member **302.**

When first number of characteristics **352** and second number of characteristics **354** substantially match, capacity **356** of composite elongate member **302** to withstand forces **358** increases. Forces **358** are generated when pressure is applied to composite elongate member **302** and structure **306.** For example, pressure may be applied to composite elongate member **302** and structure **306** when aircraft **301** is being operated.

As one illustrative example, pressurization in a cabin of aircraft **301** may cause pressure to be applied to composite elongate member **302** and structure **306** when composite elongate member **302** and structure **306** are part of a fuselage of aircraft **301.** As another illustrative example, pressure may be applied to composite elongate member **302** and structure **306** in response to the movement of fuel in a fuel tank in a wing of aircraft **301** when composite elongate member **302** and structure **306** are part of the wing of aircraft **301.**

The pressure applied to composite elongate member **302** and structure **306** may be in a direction substantially perpendicular to surface **337** of structure **306** in these illustrative examples. This pressure generates forces **358.** Forces **358** may include any forces that pull composite elongate member **302** away from structure **306** when structure **306** is attached to composite elongate member **302** at first side **334.** In other words, forces **358** include any forces that create a tensile load where composite elongate member **302** is attached to structure **306.**

Forces **358** may be substantially perpendicular to surface 337 of structure **306** in these illustrative examples. Further, forces **358** may be substantially perpendicular to first side **334** of first section **320** of composite elongate member **302.**

The illustration of structural system **300** in **Figure 3** is not meant to imply physical or architectural limitations to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in some illustrative examples, more than one structure may be attached to composite elongate member **302** at first side **334.** As one illustrative example, second structure **360** may be attached to structure **306.** For example, when structure **306** takes the form of a base charge, second structure **360** may be a skin panel that is attached to the base charge. In some illustrative examples, the base charge may have the same arrangement as second arrangement **355** for composite elongate member **302.**

As another illustrative example, third structure **362** may be attached to second side **331** of second section **322** of composite elongate member **302.** Third structure **362** may be, for example, a rib, a spar, or some other suitable type of structure.

In still other illustrative examples, structural system **300** may include one or more composite members in addition to or in place of composite elongate member **302** attached to structure **306.** For example, a plurality of stringers may be attached to structure **306** in the form of a skin panel to form structural system **300.**

In some cases, structural system **300** may be located in a platform other than aircraft **301.** For example, structural system **300** may be located in a platform selected from at least one of a mobile platform, a stationary platform, a land-based structure, an aquatic-based structure, a space-based structure, an aircraft, a surface ship, a tank, a personnel carrier, a train, a spacecraft, a space station, a satellite, a submarine, an automobile, a power plant, a bridge, a dam, a manufacturing facility, and a building.

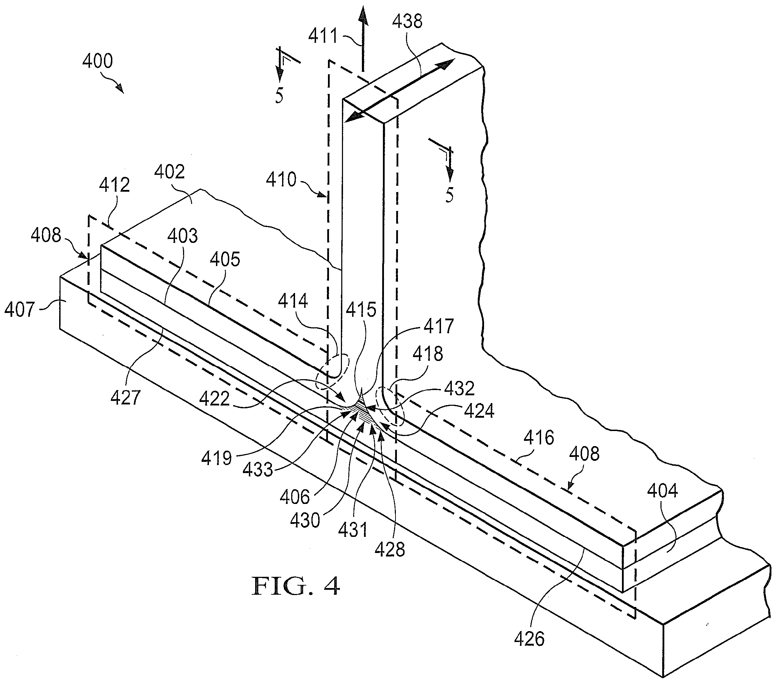

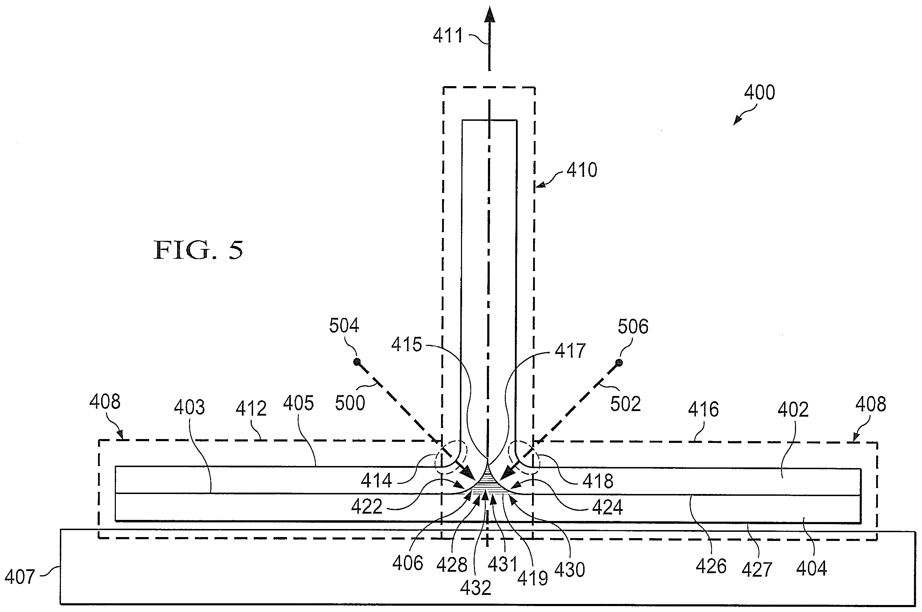

With reference now to **Figure 4****,** an illustration of a perspective view of a structural system is depicted in accordance with an advantageous example. In this illustrative example, structural system **400** is an example of one implementation for structural system **300** in **Figure 3****.** The different components shown in this figure and in **Figures 5****,** **6****,** and **9****-17** may be combined with components in **Figure 3****,** used with components in **Figure 3****,** or a combination of the two. Additionally, some of the components in this figure may be illustrative examples of how components shown in block form in **Figure 3** may be implemented as physical structures.

As depicted, structural system **400** includes stringer **402,** base charge **404,** skin **407,** and noodle **406.** Stringer **402** is an example of one implementation for composite elongate member **302** in **Figure 3****.** Base charge **404** is an example of one implementation for structure **306** in **Figure 3****,** and noodle **406** is an example of one implementation for filler structure **336** in **Figure 3****.**

In this illustrative example, stringer **402** is a blade stringer. Stringer **402** has first side **403** and second side **405.** Further, stringer **402** has first section **408** and second section **410.** First section **408** and second section **410** are part of the same structure in this example. As depicted, first section **408** is a discontinuous section.

Second section **410** is positioned relative to first section **408** such that second section **410** extends away from first section **408** in the direction of arrow **411.** Arrow **411** has a direction that is substantially perpendicular to first section **408.**

In this depicted example, second section **410** meets first portion **412** of first section **408** at first location **414** of second section **410** and second portion **416** of first section **408** at second location **418** of second section **410.** First location **414** has first curved shape **422.** Second location **418** has second curved shape **424.**

In this illustrative example, base charge **404** is attached to first side **403** of stringer **402.** In particular, first surface **426** of base charge **404** contacts first side **403** of first section **408.** Skin **407** is attached to second surface **427** of base charge **404.** As depicted, first surface **426** does not come into contact with first side **403** of second section **410.**

Channel **428** is formed at first side **403** of stringer **402** between first location **414** and second location **418** of second section **410.** First side **403** at first location **414** forms first wall **415** for channel **428,** and first side **403** at second location **418** forms second wall **417** for channel **428.** Further, first surface **426** of base charge **404** forms third wall **419** for channel **428.** In this manner, channel **428** has shape **430** that is conical in this illustrative example.

Noodle **406** is located in channel **428.** Noodle **406** comprises number of composite structures **431.** Number of composite structures **431** is an example of one implementation for number of composite structures **304** in **Figure 3****.** Number of composite structures **431** is comprised of composite layers **432.** Composite layers **432** are layers of composite material.

The configuration of composite layers **432** is selected such that shape **433** of noodle **406** substantially conforms to shape **430** of channel **428.** Further, with noodle **406,** a capacity for stringer **402** to withstand forces that pull stringer **402** away from base charge **404** and/or skin **407** is increased as compared to when noodle **406** is absent or when a different type of noodle is present. These forces are in the direction of arrow **411.**

As depicted, composite layers **432** for noodle **406** may be laid up substantially perpendicular to first side **403** and first surface **426** of base charge **404.** Further, each of composite layers **432** may be arranged having a particular angle with respect to axis **438** through stringer **402.**

With reference now to **Figure 5****,** an illustration of a cross-sectional view of a structural system is depicted in accordance with an advantageous example. In this illustrative example, a cross-sectional view of structural system **400** from **Figure 4** is depicted taken along lines **5-5** in **Figure 4****.** Second section **410** of stringer **402** is positioned substantially perpendicular relative to first section **408** of stringer **402.**

As depicted in this example, first curved shape **422** has first radius **500.** Further, second curved shape **424** has second radius **502.** First radius **500** is a distance from the portion of first side **403** in first location **414** that forms first curved shape **422** to point **504.** Similarly, second radius **502** is a distance from the portion of first side **403** in second location **418** that forms second curved shape **424** to point **506.**

First curved shape **422** is an example of one implementation for first curved shape **324** in **Figure 3****.** Second curved shape **424** is an example of one implementation for second curved shape **328** in **Figure 3****.** In this illustrative example, each of first curved shape **422** and second curved shape **424** take the form of a portion of a circle. Of course, in other illustrative examples, each of first curved shape **422** and second curved shape **424** may take some other suitable form, such as, for example, a portion of an oval, an arc, a portion of an ellipse, or some other suitable type of curved shape.

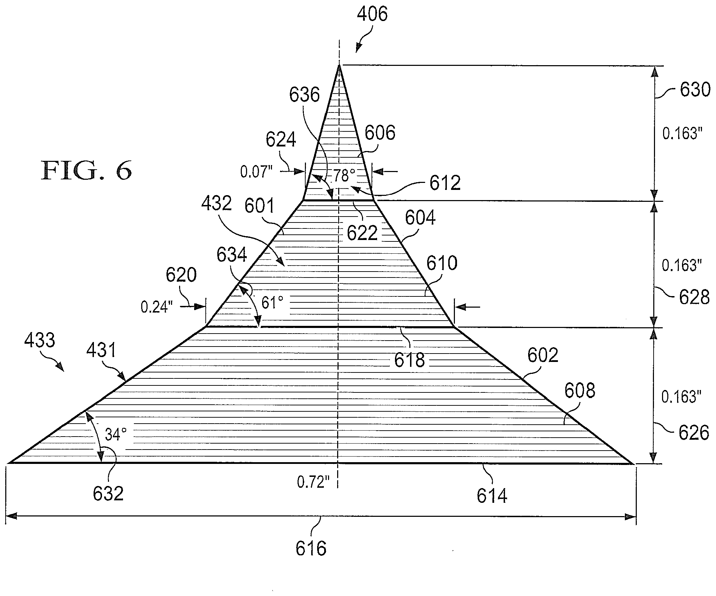

Turning now to **Figure 6****,** an illustration of a noodle is depicted in accordance with an advantageous example. In this illustrative example, noodle **406** from **Figures 4-5** is depicted in greater detail. As depicted, noodle **406** has configuration **601** for number of composite structures **431** comprising composite layers **432.** In particular, number of composite structures **431** includes composite structure **602,** composite structure **604,** and composite structure **606.**

Composite structure **602** is configured to contact third wall **419** of channel **428** and a base portion of first wall **415** and second wall **417** in **Figure 4****.** Composite structure **606** is configured to contact an apical portion of first wall **415** and second wall **417** of channel **428** in **Figure 4****.** Composite structure **604** is located between composite structure **602** and composite structure **606.** These composite structures form shape **433** for noodle **406** that substantially conforms to shape **430** of channel **428** in **Figure 4****.**

Composite structure **602,** composite structure **604,** and composite structure **606** may also be referred to as segments. For example, composite structure **602** may be a base segment, composite structure **606** may be a top segment, and composite structure **604** may be an intermediate segment between the base segment and the top segment.

In this illustrative example, composite structure **602** is formed from composite layers **608,** composite structure **604** is formed from composite layers **610,** and composite structure **606** is formed from composite layers **612.**

Configuration **601** for noodle **406** is selected such that shape **433** of noodle **406** substantially conforms to shape **430** of channel **428** in **Figures 4-5****.** As depicted, base **614** of composite structure **602** has length **616.** Base **618** of composite structure **604** has length **620,** and base **622** of composite structure **606** has length **624.**

Further, composite structure **602** has height **626,** composite structure **604** has height **628,** and composite structure **606** has height **630.** Additionally, composite structure **602** has angle **632** at base **614.** Composite structure **604** has angle **634** at base **618.** Composite structure **606** has angle **636** at base **622.**

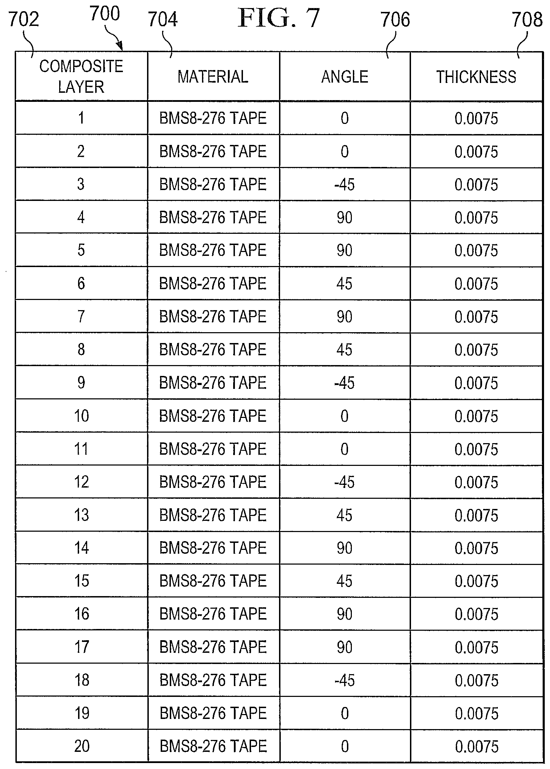

With reference now to **Figure 7****,** an illustration of a table of values for characteristics for composite layers is depicted in accordance with an advantageous example. In this illustrative example, table **700** provides values for characteristics for composite layers **608** for composite structure **602** in noodle **406** in **Figure 6****.**

As depicted, table **700** includes composite layer **702,** material **704,** angle **706,** and thickness **708.** Composite layer **702** identifies the particular layer within composite layers **608.** In these illustrative examples of composite layers **608,** composite layers **608** include about 20 layers of composite material.

Further, material **704** identifies the particular type of material from which a layer is formed. In this illustrative example, all of composite layers **608** are comprised of the same type of material. Angle **706** identifies the angle at which a layer is arranged with respect to axis **438** through stringer **402** in **Figure 4****.** As depicted, different layers may be arranged at different angles with respect to axis **438.** Thickness **708** identifies a thickness of a layer. In these illustrative examples, all of composite layers **608** have substantially the same thickness.

Composite layers **610** for composite structure **604** in **Figure 6** may have substantially the same characteristics as composite layers **608.** For example, composite layers **610** may also include about 20 layers that are comprised of substantially the same material and have substantially the same thickness. Further, the different layers in composite layers **610** may be arranged having substantially the same angles with respect to axis **438** in **Figure 4** as composite layers **608.**

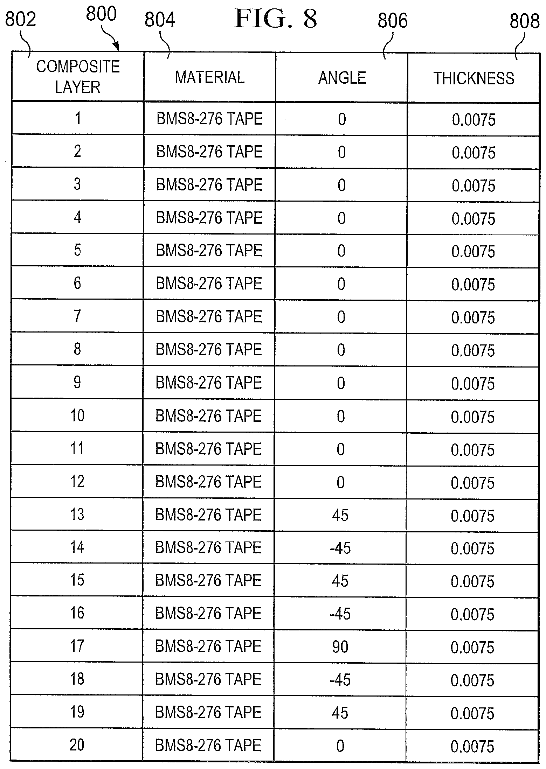

With reference now to **Figure 8****,** an illustration of a table of values for characteristics of composite layers is depicted in accordance with an advantageous example. In this illustrative example, table **800** provides values for characteristics for composite layers **612** for composite structure **606** in noodle **406** in **Figure 6****.** Similar to table **700** in **Figure 7****,** table **800** includes composite layer **802,** material **804,** angle **806,** and thickness **808.** The examples of each of the characteristics for layers described in each of first curved shape **422** and second curved shape **424** in **Figure 4** may be combined with each of the characteristics for layers described in **Figure 7****.**

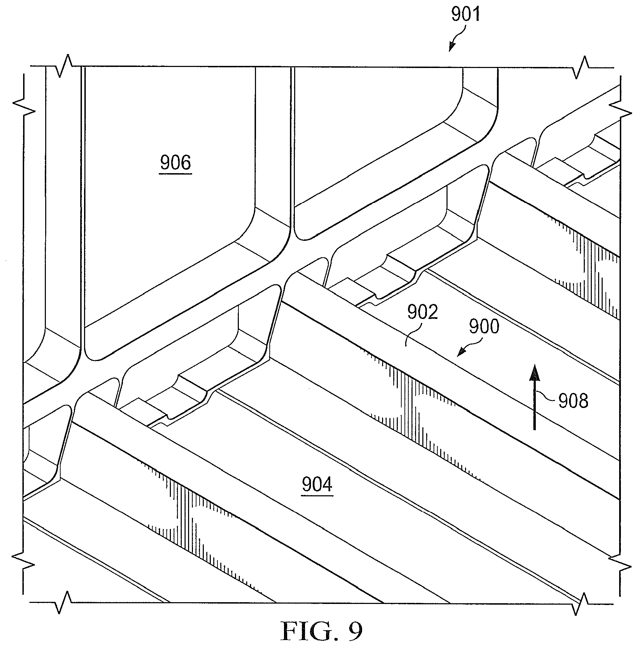

With reference now to **Figure 9****,** an illustration of a structural system in a wing is depicted in accordance with an advantageous example. In this illustrative example, structural system **900** is located inside wing **901** of an aircraft, such as aircraft **301** in **Figure 3****.**

Structural system **900** includes stringers **902** attached to skin panel **904.** Stringers **902,** in this illustrative example, are hat stringers. In this depicted example, filler structures (not shown in this view), such as filler structure **336** in **Figure 3****,** may attach at least a portion of each of stringers **902** to a base charge (not shown in this view). The base charges (not shown) for stringers **902** connect stringers **902** to skin panel **904.**

Further, as illustrated, rib **906** is attached to stringers **902** and skin panel **904.** Rib **906** is a shear-tied rib in this depicted example. The filler structures (not shown) provide an increased capacity for stringers **902** to withstand forces that pull stringers **902** and/or rib **906** away from skin panel **904** in the direction of arrow **908.**

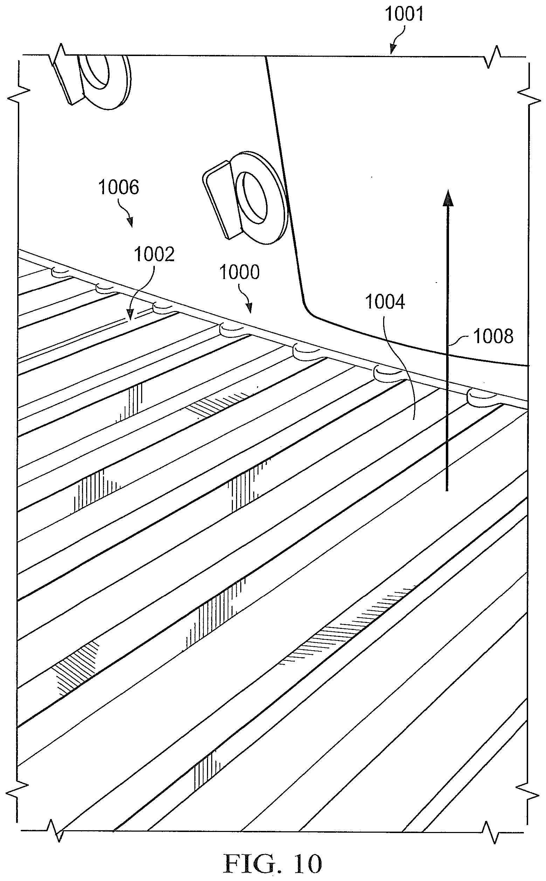

Turning now to **Figure 10****,** an illustration of a structural system in a wing is depicted in accordance with an advantageous example. In this illustrative example, structural system **1000** is located inside wing **1001** of an aircraft, such as aircraft **301** in **Figure 3****.**

Structural system **1000** includes stringers **1002** attached to skin panel **1004.** Stringers **1002** are hat stringers in this depicted example.

Using filler structures (not shown), such as filler structure **336** in **Figure 3****,** to attach portions of stringers **1002** to skin panel **1004** provides an increased capacity for stringers **1002** to withstand forces that pull stringers **1002** away from skin panel **1004** in the direction of arrow **1008.** This increased capacity to withstand these forces allows rib **1006** to be attached to stringers **1002** without being attached to skin panel **1004.**

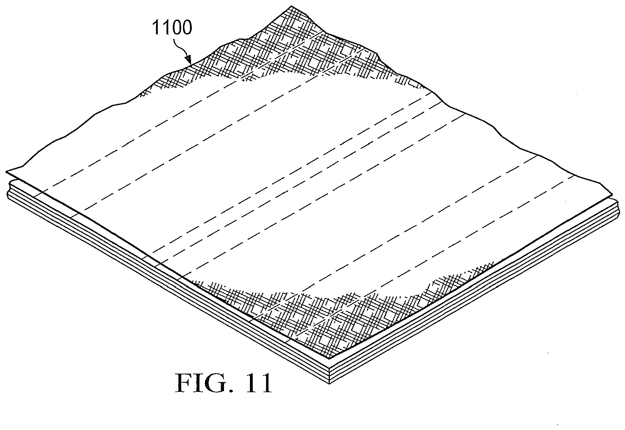

With reference now to **Figures 11-14****,** illustrations of the different stages of forming a structural system are depicted in accordance with an advantageous example. These figures provide an example of forming a structural system, such as structural system **300** in **Figure 3****.**

Turning now to **Figure 11****,** composite layers **1100** are laid up. Composite layers **1100** are examples of one implementation for layers **312** of composite material **314** in **Figure 3****.** Composite layers **1100** may be used to form a shape for a composite elongate member, such as shape **316** for composite elongate member **302** in **Figure 3****.**

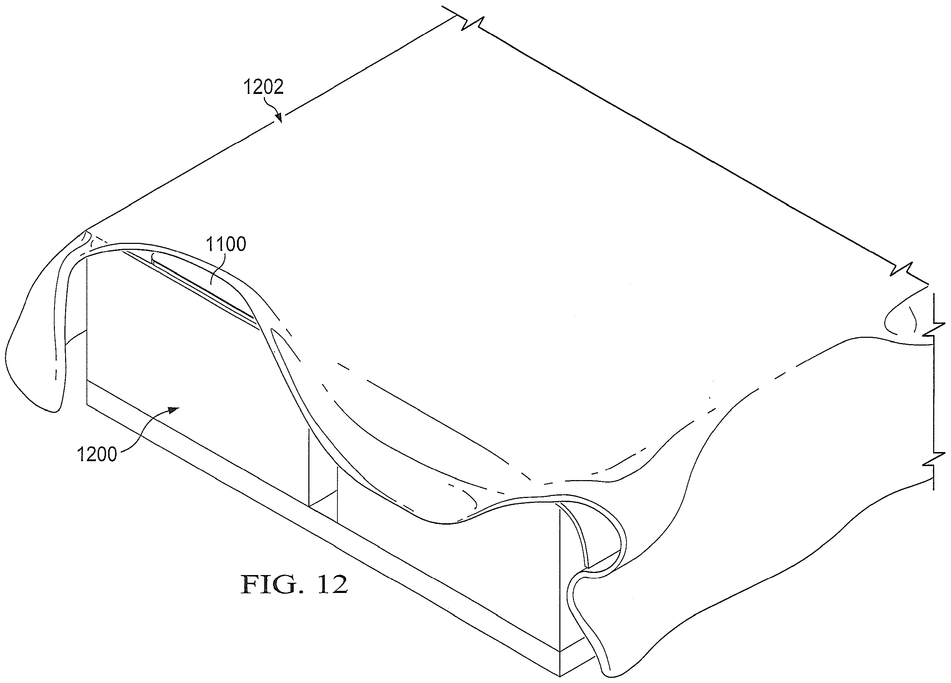

In **Figure 12****,** heating element **1200** is placed over composite layers **1100.** Heating element **1200** is a heating blanket in this illustrative example. Further, insulation element **1202** is placed over heating element **1200.** Insulation element **1202** is an insulation blanket in this illustrative example. With heating element **1200** and insulation element **1202** over composite layers **1100,** composite layers **1100** are heated. In one illustrative example, composite layers **1100** are heated to about 110 degrees Fahrenheit to shape composite layers **1100** to form a shape for a stringer.

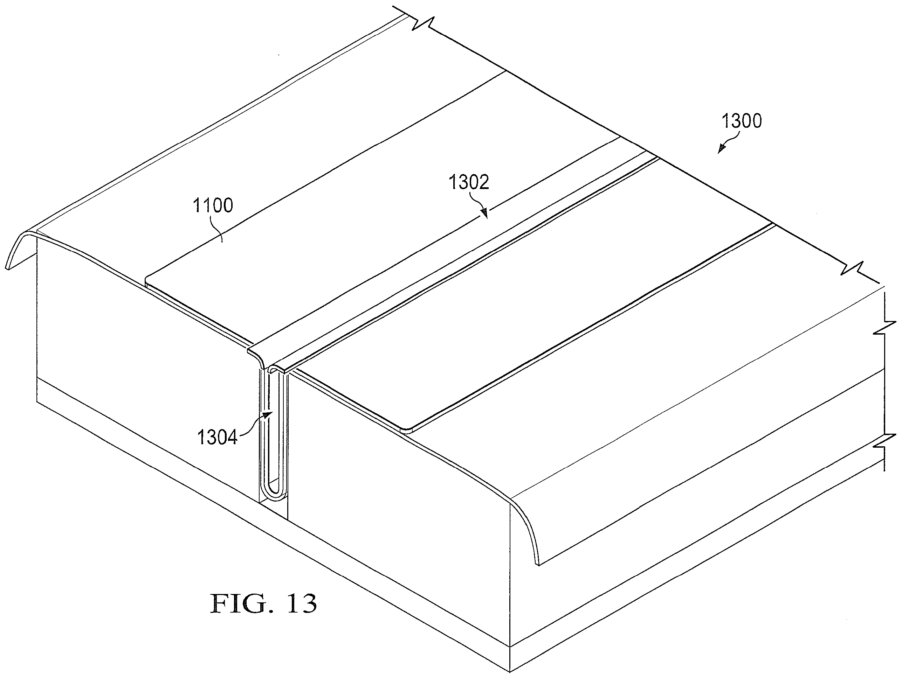

With reference now to **Figure 13****,** composite layers **1100** have been heated to form shape **1300.** Composite layers **1100** with shape **1300** form stringer **1302.** In this illustrative example, channel **1304** is formed in stringer **1302.**

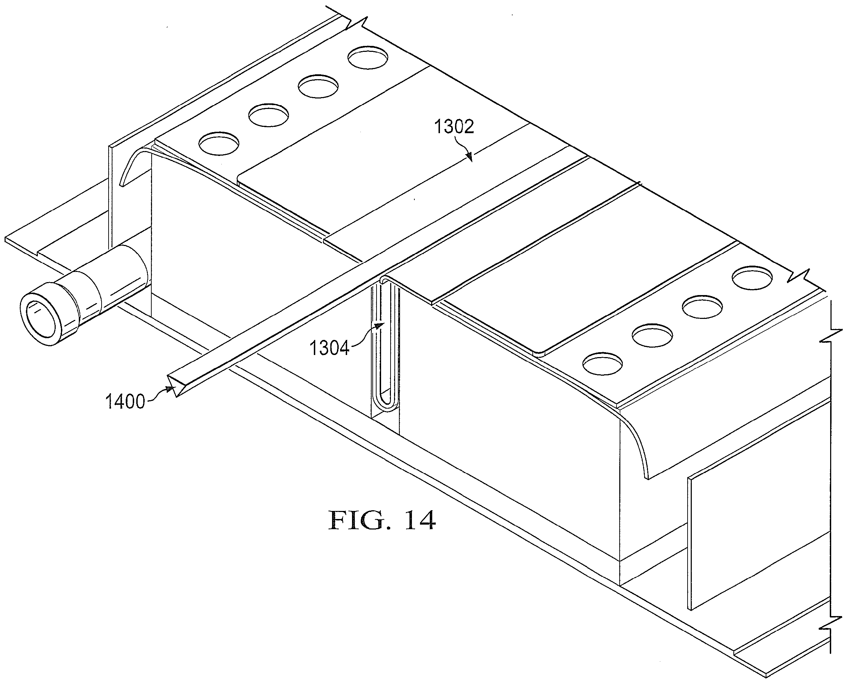

In **Figure 14****,** noodle **1400** is placed into channel **1304.** Noodle **1400** may be implemented using, for example, noodle **406** in **Figure 6****.** A base charge (not shown) may be placed over noodle **1400** and stringer **1302.** A skin panel (not shown) may then be placed over the base charge. Stringer **1302,** noodle **1400,** the base charge, and the skin panel are then cured together. This curing may be performed by heating these different components together. For example, these different components may be cured in an oven, an autoclave, or some other suitable device configured to heat components.

In some cases, the components may be placed in a bag. These components may then be heated, while a vacuum is applied to the bag to generate pressure and heat to form a structural system from the assembly of the components.

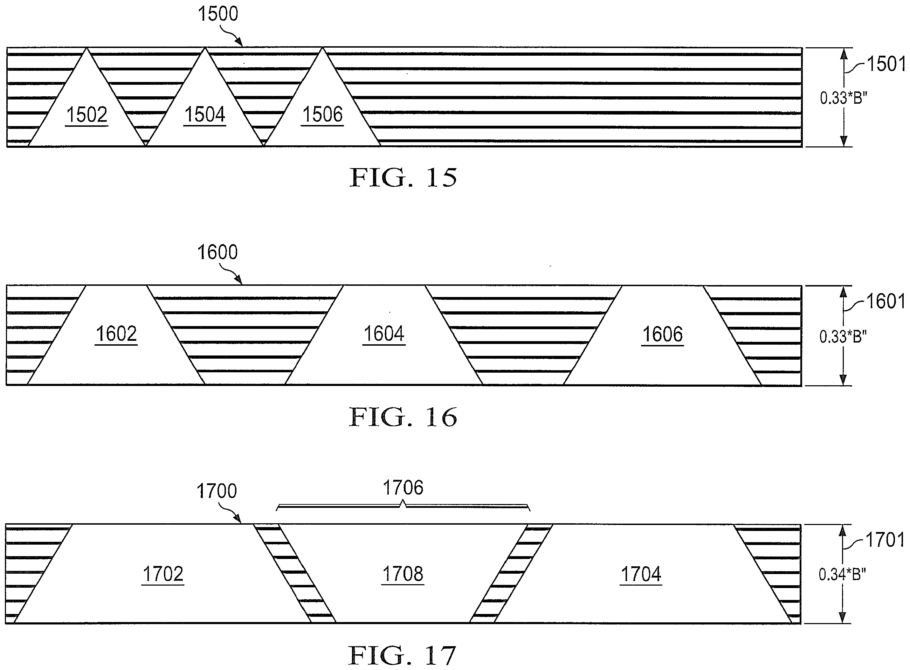

With reference now to **Figures 15-17****,** illustrations of panels from which composite structures for noodles are formed are depicted in accordance with an advantageous example. These composite structures may be cut to form a number of noodles, such as noodle **406** in **Figure 6****.**

Turning now to **Figure 15****,** panel **1500** is comprised of composite layers. Panel **1500** has height **1501.** Cuts are made into panel **1500** to form composite structures **1502, 1504,** and **1506.** These composite structures have substantially the same shape and size. Composite structure **602** in **Figure** 6 may be formed in a manner similar to the manner in which composite structures **1502, 1504,** and **1506** are formed. Of course, additional composite structures may be cut from panel **1500.**

In **Figure 16****,** panel **1600** is comprised of composite layers. Panel **1600** has height **1601.** Cuts are made into panel **1600** to form composite structures **1602, 1604,** and **1606.** These composite structures have substantially the same shape and size. Composite structure **604** in **Figure** 6 may be formed in a manner similar to the manner in which composite structures **1602, 1604,** and **1606** are formed.

Additionally, in **Figure 17****,** panel **1700** is comprised of composite layers. Panel **1700** has height **1701.** Cuts are made into panel **1700** to form composite structures **1702** and **1704.** These composite structures have substantially the same shape and size. Composite structure **606** in **Figure** 6 may be formed in a manner similar to the manner in which composite structures **1702** and **1704** are formed.

The composite structures formed in **Figures 15, 16,** and **17** may be stacked on top of each other to form noodles. In one illustrative example, composite structure **1502** may be stacked on top of composite structure **1602,** which may be stacked on top of composite structure **1702** to form a noodle. These composite structures are stacked to form a noodle having a shape that substantially conforms to a particular channel in a composite elongate member.

As another example, composite structure **1504** may be stacked on top of composite structure **1604,** which may be stacked on top of composite structure **1704** to form another noodle. This noodle has a substantially same size and shape as the noodle formed by stacking composite structures **1502, 1602,** and **1702.**

In other illustrative examples, other cuts may be made in other portions of panel **1700,** such as portion **1706,** to form other composite structures for the noodle. As one illustrative example, cuts may be made in panel **1700** to form composite structure **1708.** Composite structure **1708** may be used in the same noodle as composite structures **1502, 1602,** and **1702,** or in a different noodle.

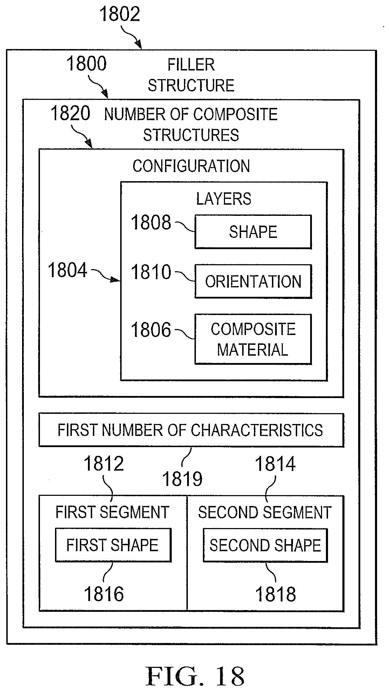

With reference now to **Figure 18****,** an illustration of a filler structure in the form of a block diagram is depicted in accordance with an advantageous example. In this illustrative example, number of composite structures **1800** is an example of one implementation for number of composite structures **304** in **Figure 3****.**

In this illustrative example, number of composite structures **1800** forms filler structure **1802** for channel **332** in **Figure** 3 that is different from filler structure **336** in **Figure 3****.** Filler structure **1802** is another example of a noodle for channel **332** of composite elongate member **302** in **Figure 3****.**

In particular, number of composite structures **1800** may be placed into channel **332** of composite elongate member **302** to attach structure **306** to composite elongate member **302** in **Figure 3****.** More specifically, number of composite structures **1800** attaches a portion of surface **337** of structure **306** to the portions of first side **334** at first location **321** and second location **323** of second section **322** for composite elongate member **302** in **Figure 3****.**

As depicted in this example, number of composite structures **1800** is comprised of layers **1804** of composite material **1806.** In this illustrative example, layers **1804** of composite material **1806** have shape **1808** and orientation **1810.** Shape **1808** and orientation **1810** for number of composite structures **1800** are configured to increase capacity **356** of composite elongate member **302** to withstand forces **358** that may pull composite elongate member **302** away from structure **306** in **Figure 3****.**

As one illustrative example, orientation **1810** of layers **1804** of composite material **1806** may be a vertical orientation. In other words, layers **1804** of composite material **1806** may be orientated substantially perpendicular to surface **337** of structure **306** to increase capacity **356** of composite elongate member **302** from **Figure 3** to withstand forces **358** that pull composite elongate member **302** away from structure **306.**

In this illustrative example, layers **1804** being oriented substantially perpendicular to surface **337** of structure **306** means that layers **1804** are oriented at an angle of about 90 degrees with respect to surface **337** of structure **306.** In other words, layers **1804** are oriented substantially vertically with respect to surface **337** of structure **306** that may be substantially horizontal.

Additionally, number of composite structures **1800** has shape **1808** that substantially conforms to shape **333** of channel **332** in **Figure 3****.** In other words, layers **1804** of composite material **1806** may be formed with shape **1808** to substantially conform to shape **333** of channel **332** in **Figure 3****.**

Each of number of composite structures **304** may be a segment of filler structure **1802.** For example, number of composite structures **1800** may comprise a number of segments that, when attached together, form filler structure **1802.** For example, number of composite structures **1800** may comprise a first segment, a second segment, and a set of intermediate segments located between the base segment and the top segment. As used herein, a "set of items" means zero or more items. For example, a set of intermediate segments may be an empty set or null set.

As one illustrative example, number of composite structures **1800** may comprise first segment **1812** and second segment **1814.** First segment **1812** may have first shape **1816,** and second segment **1814** may have second shape **1818.** In these illustrative examples, first shape **1816** may be substantially symmetrical to second shape **1818.** When placed together such that both first segment **1812** and second segment **1814** attach to surface **337** of structure **306** in **Figure 3****,** first shape **1816** for first segment **1812** and second shape **1818** for second segment **1814** may form shape **1808** for number of composite structures **1800.**

In these illustrative examples, number of composite structures **1800** has first number of characteristics **1819** that substantially match second number of characteristics **354** for composite elongate member **302** in **Figure 3****.** First number of characteristics **1819** may include substantially the same characteristics as second number of characteristics **354.** For example, first number of characteristics **1819** may comprise, without limitation, at least one of a coefficient of thermal expansion, a Young's modulus, and other suitable characteristics.

As one illustrative example, layers **1804** for number of composite structures **1800** may have configuration **1820.** Configuration **1820** for layers **1804** is selected such that first number of characteristics **1819** for number of composite structures **1800** substantially matches second number of characteristics **354** for composite elongate member **302** in **Figure 3****.** For example, with configuration **1820,** a value for a Young's modulus for number of composite structures **1800** may be within a desired range from a value for a Young's modulus for composite elongate member **302** in **Figure 3****.**

When first number of characteristics **1819** for number of composite structures **1800** and second number of characteristics **354** for composite elongate member **302** in **Figure 3** substantially match, capacity **356** of composite elongate member **302** to withstand forces **358** increases. Forces **358** are generated when pressure is applied to composite elongate member **302** and structure **306.** For example, pressure may be applied to composite elongate member **302** and structure **306** when aircraft **301** is being operated.

In particular, when layers **1804** of composite material **1806** are oriented substantially perpendicular to surface **337** of composite elongate member **302** in **Figure 3****,** the number of inconsistencies in filler structure **1802** that form substantially parallel to surface **337** of composite elongate member **302** may be reduced. For example, delamination of layers **1804** and/or the growth of other inconsistencies substantially parallel to surface **337** of composite elongate member **302** may be substantially arrested.

The illustration of number of composite structures **1800** in **Figure 18** is not meant to imply physical or architectural limitations to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment. For example, in some illustrative examples, number of composite structures **1800** may include segments in addition to first segment **1812** and second segment **1814.**

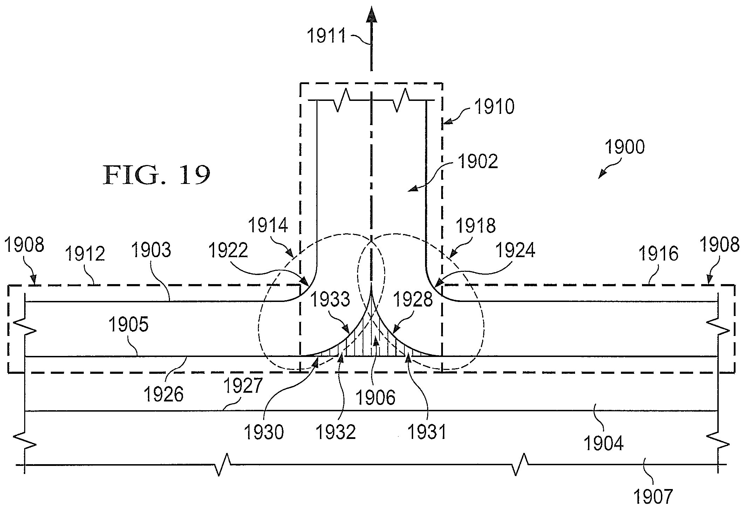

With reference now to **Figure 19****,** an illustration of a perspective view of a structural system is depicted in accordance with an advantageous example. In this illustrative example, structural system **1900** is an example of one implementation for structural system **300** shown in block form in **Figure 3** using number of composite structures **1800** in **Figure 18****.** In particular, structural system **1900** includes stringer **1902,** base charge **1904,** skin **1907,** and noodle **1906.** Stringer **1902** is an example of one implementation for composite elongate member **302** in **Figure 3****.** Base charge **1904** is an example of one implementation for structure **306** shown in block form in **Figure 3****,** and noodle **1906** is an example of one implementation for filler structure **1802** in **Figure 18****.**

In this illustrative example, stringer **1902** is a blade stringer. Stringer **1902** has first side **1903** and second side **1905.** Further, stringer **1902** has first section **1908** and second section **1910.** First section **1908** and second section **1910** are part of the same structure in this example. As depicted, first section **1908** is a discontinuous section.

Second section **1910** is positioned relative to first section **1908** such that second section **1910** extends away from first section **1908** in the direction of arrow **1911.** Arrow **1911** has a direction that is substantially perpendicular to first section **1908.**

In this depicted example, second section **1910** meets first portion **1912** of first section **1908** at first location **1914** of second section **1910** and second portion **1916** of first section **1908** at second location **1918** of second section **1910.** First location **1914** has first curved shape **1922.** Second location **1918** has second curved shape **1924.**

In this illustrative example, base charge **1904** is attached to first side **1903** of stringer **1902.** In particular, first surface **1926** of base charge **1904** contacts first side **1903** of first section **1908.** Skin **1907** is attached to second surface **1927** of base charge **1904.** As depicted, first surface **1926** does not come into contact with first side **1903** of second section **1910.**

Noodle **1906** is located in channel **1928.** Noodle **1906** comprises number of composite structures **1931.** Number of composite structures **1931** is an illustrative example of one implementation for number of composite structures **1800** shown in block form in **Figure 18****.** Number of composite structures **1931** is comprised of composite layers **1932.** Composite layers **1932** are layers of composite material, such as layers **1804** of composite material **1806** shown in block form in **Figure 18****.**

The configuration of composite layers **1932** is selected such that shape **1933** of noodle **1906** substantially conforms to shape **1930** of channel **1928.** Further, with noodle **1906,** a capacity for stringer **1902** to withstand forces that pull stringer **1902** away from base charge **1904** and/or skin **1907** is increased as compared to when noodle **1906** is absent or when a different type of noodle is present. These forces are in the direction of arrow **1911.**

As depicted, composite layers **1932** for noodle **1906** may be oriented substantially perpendicular to first side **1903** of first section **1908** and first surface **1926** of base charge **1904.** In other words, composite layers **1932** are oriented at an angle of about 90 degrees with respect to first surface **1926** of base charge **1904.** More specifically, composite layers **1932** are oriented in the direction of arrow **1911** in this depicted example.

Additionally, in this illustrative example, adhesive and/or some other suitable type of material may be used to fill in any gaps or spaces between noodle **1906** and first side **1903** of stringer **1902** at first location **1914** and second location **1918.** In this manner, gaps or spaces in channel **1928** may not be present when stringer **1902,** base charge **1904,** and noodle **1906** are attached together.

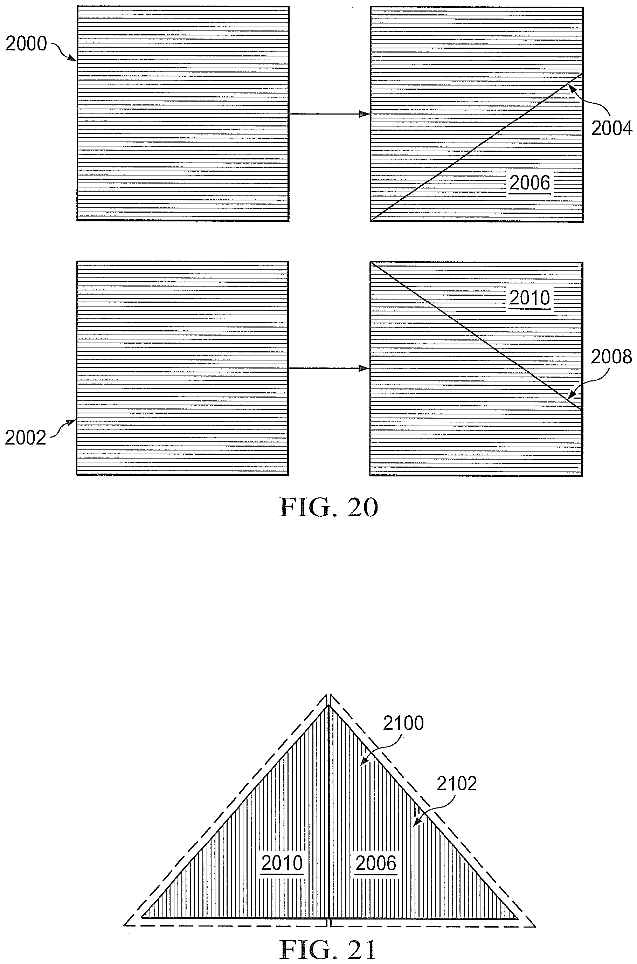

With reference now to **Figure 20****,** an illustration of panels from which composite structures for noodles are formed is depicted in accordance with an advantageous example. These composite structures may be cut to form a number of composite structures, such as number of composite structures **1800** shown in block form in **Figure 18****.** In particular, these composite structures may be cut to form a noodle, such as noodle **1906** in **Figure 19****.**

As depicted, panel **2000** and panel **2002** are comprised of composite layers. Cut **2004** is made into panel **2000** to form composite structure **2006.** Cut **2008** is made into panel **2002** to form composite structure **2010.** These composite structures have substantially the same shape and size. The leftover portions of panel **2000** and panel **2002** may be used to form other composite structures, depending on the implementation.

With reference now to **Figure 21****,** an illustration of a laminate for a noodle is depicted in accordance with an advantageous example. In this illustrative example, composite structure **2006** and composite structure **2010** from **Figure 20** may be attached together to form laminate **2100** with shape **2102.** In particular, composite structure **2006** and composite structure **2010** are rotated to form laminate **2100** with shape **2102.** Laminate **2100** may be used to form a noodle for a composite elongate member in the form of a stringer.

Shape **2102** for laminate **2100** may be larger than a shape for the channel into which the final noodle is to be placed. In particular, shape **2102** for laminate **2100** is configured such that after curing, laminate **2100** may have a final shape that substantially conforms to the shape of the channel in the stringer. Laminate **2100** may be cured by applying heat and/or pressure to laminate **2100** to form the noodle for the stringer.

Of course, in other illustrative examples, laminate **2100** having shape **2102** may be formed from a single panel by making two cuts at about 45 degrees with respect to the surface of the panel and with an angle of about 90 degrees between the two cuts.

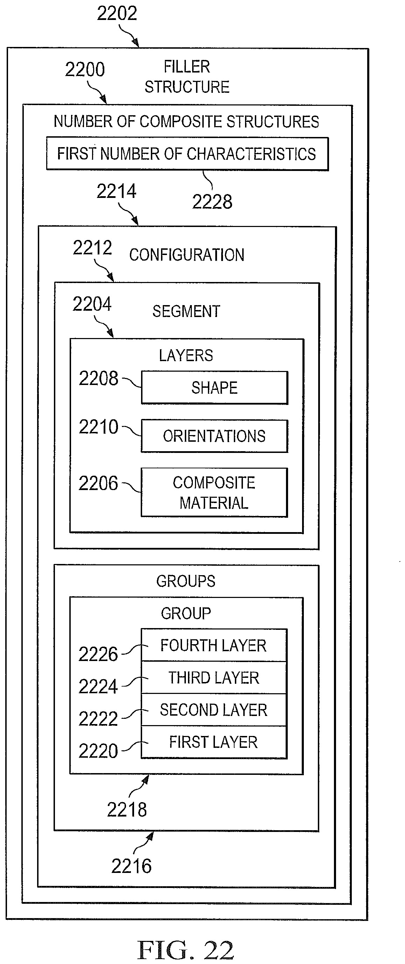

With reference now to **Figure 22****,** an illustration of a filler structure in the form of a block diagram is depicted in accordance with an advantageous example. In this illustrative example, number of composite structures **2200** is an example of one implementation for number of composite structures **304** shown in block form in **Figure 3****.**

In this illustrative example, number of composite structures **2200** forms filler structure **2202** for channel **332** shown in block form in **Figure 3****.** Filler structure **2202** is another example of a noodle for channel 332 of composite elongate member **302** shown in block form in **Figure 3****.**

In particular, number of composite structures **2200** may be placed into channel **332** of composite elongate member **302** to attach structure **306** to composite elongate member **302** shown in block form in **Figure 3****.** More specifically, number of composite structures **2200** attaches a portion of surface **337** of structure **306** to the portions of first side **334** at first location **321** and second location **323** of second section **322** for composite elongate member **302** shown in block form in **Figure 3****.**

As depicted in this example, number of composite structures **2200** is comprised of layers **2204** of composite material **2206.** In this illustrative example, layers **2204** of composite material **2206** have shape **2208.** Shape **2208** for number of composite structures **2200** is configured to increase capacity **356** of composite elongate member **302** to withstand forces **358** that may pull composite elongate member **302** away from structure 306 shown in block form in **Figure 3****.** In particular, number of composite structures **2200** has shape **2208** that substantially conforms to shape **333** of channel **332** shown in block form in **Figure 3****.** In other words, layers **2204** of composite material **2206** may be formed with shape **2208** to substantially conform to shape **333** of channel **332** shown in block form in **Figure 3****.**

In this illustrative example, each of number of composite structures **2200** may be a segment of filler structure **2202.** For example, number of composite structures **2200** may comprise a number of segments, that when attached together, form filler structure **2202.** In one illustrative example, number of composite structures **2200** may comprise only segment **2212** comprising layers **2204** of composite material **2206.**

Layers **2204** of composite material **2206** in segment **2212** have different orientations **2210** with respect to axis **357** through composite elongate member **302** shown in block form in **Figure 3****.** Orientations **2210** of layers **2204** of composite material **2206** in number of composite structures **2200** may be selected to increase capacity **356** of composite elongate member **302** to withstand forces **358** that may pull composite elongate member **302** away from structure **306** shown in block form in **Figure 3****.**

For example, layers **2204** may be laid up with configuration **2214.** Configuration **2214** for layers **2204** may comprise groups **2216** of layers **2204.** As used herein, a group of layers is two or more layers. As one illustrative example, layers **2204** may be formed into groups **2216** of layers **2204** in which each group in groups **2216** comprises two layers. These two layers may have different orientations **2210.**

Group **2218** is an example of one of groups **2216.** In one illustrative example, group **2218** comprises first layer **2220** and second layer **2222.** Second layer **2222** may be laid up on top of first layer **2220.** First layer **2220** may comprise fibers that are arranged at an angle of about 0 degrees with respect to axis **357** through composite elongate member **302** shown in block form in **Figure 3****.** Further, second layer **2222** may comprise fibers that are arranged at an angle selected from one of about 45 degrees with respect to axis **357** and about 90 degrees with respect to axis **357.**

In configuration **2214** for layers **2204,** all of the groups in groups **2216** may have two layers arranged in substantially the same manner as first layer **2220** and second layer **2222** for group **2218.** In particular, the angle at which the fibers for second layer **2222** are arranged in the different groups in groups **2216** may be alternated between about 45 degrees with respect to axis **357** and about 90 degrees with respect to axis **357** through composite elongate member **302** shown in block form in **Figure 3****.** In other words, two adjacent groups in groups **2216** may not have second layer **2222** with fibers having the same angle with respect to axis **357.**

In another illustrative example, group **2218** may comprise layers in addition to first layer **2220** and second layer **2222.** For example, group **2218** also may include third layer **2224** and fourth layer **2226.** Second layer **2222** may be laid up on first layer **2220.** Third layer **2224** may be laid up on second layer **2222.** Fourth layer **2226** may be laid up on third layer **2224.**

When group **2218** comprises four layers, first layer **2220** and fourth layer **2226** may comprise fibers that are arranged at an angle of about 0 degrees with respect to axis **357** through composite elongate member **302** in **Figure 3****.** Second layer **2222** and third layer **2224** may comprise fibers that are arranged at an angle selected from one of about 45 degrees with respect to axis **357** and about 90 degrees with respect to axis **357.** In this manner, second layer **2222** and third layer **2224** may be "sandwiched" between first layer **2220** and fourth layer **2226** having fibers arranged at the angle of about 0 degrees with respect to axis **357** through composite elongate member **302.**

Additionally, in this illustrative example, groups **2216** of layers **2204** may be formed as a laminate that has a shape larger than shape **333** of channel **332** shown in block form in **Figure 3****.** For example, layers **2204** for the different groups in groups **2216** that are laid up to form the laminate may be wider than shape **333** of channel **332** in a direction substantially perpendicular to axis **357** through composite elongate member **302.** The shape for the laminate is formed such that after curing of the laminate to form filler structure **2202,** filler structure **2202** has shape **2208** that substantially conforms to shape **333** of channel **332** shown in block form in **Figure 3****.**

Further, in this illustrative example, layers **2204** may have different widths, depending on the implementation. As one illustrative example, layers **2204** may have widths that decrease in value from a base of filler structure **2202** to a top of filler structure **2202.** In other words, layers **2204** that are closer to structure **306** when filler structure **2202** is placed in channel **332** in **Figure 3** may be wider as compared to layers **2204** that are further away from structure **306.**

In this manner, layers **2204** may have widths that form shape **2208** similar to shape **333** of channel **332** shown in block form in **Figure 3****.** In particular, these widths may be selected such that the widths of layers **2204** are wider than shape **333** of channel **332** prior to curing of layers **2204** to form filler structure **2202.** As a result, prior to curing, layers **2204** may have shape **2208** with a size that is slightly larger than the size of shape **333** of channel **332.** When layers **2204** are cured to form filler structure **2202,** the widths of layers **2204** may be reduced such that shape **2208** of filler structure **2202** has a size that substantially conforms to shape **333** of channel **332.**

In these illustrative examples, number of composite structures **2200** has first number of characteristics **2228** that substantially matches second number of characteristics **354** for composite elongate member **302** shown in block form in **Figure 3****.** First number of characteristics **2228** may include substantially the same characteristics as second number of characteristics **354.** For example, first number of characteristics **2228** may comprise, without limitation, at least one of a coefficient of thermal expansion, a Young's modulus, and other suitable characteristics.

In this illustrative example, configuration **2214** for groups **2216** of layers **2204** is selected such that first number of characteristics **2228** for number of composite structures **2200** substantially matches second number of characteristics 354 for composite elongate member **302** in **Figure 3****.** For example, with configuration **2214,** a value for a Young's modulus for number of composite structures **2200** may be within a desired range from a value for a Young's modulus for composite elongate member **302** shown in block form in **Figure 3****.**

When first number of characteristics **2228** for number of composite structures **2200** and second number of characteristics **354** for composite elongate member **302** shown in block form in **Figure 3** substantially match, capacity **356** of composite elongate member **302** to withstand forces **358** increases.

The illustration of number of composite structures **2200** in **Figure 22** is not meant to imply physical or architectural limitations to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment. For example, in some illustrative examples, fewer or more layers than the ones described may be present in group **2218.**

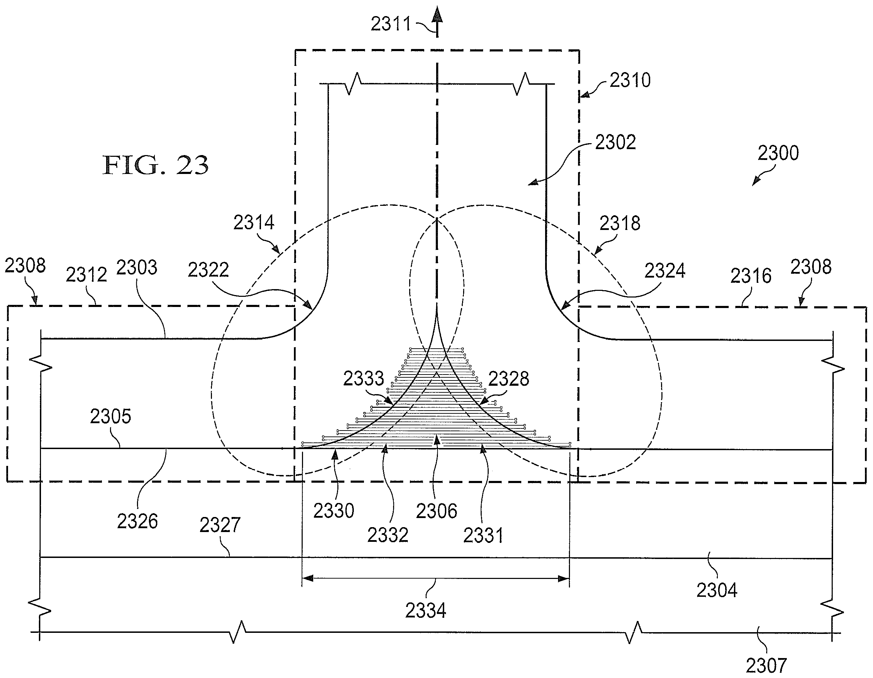

With reference now to **Figure 23****,** an illustration of a front view of a structural system is depicted in accordance with an advantageous example. In this illustrative example, structural system **2300** is an example of one implementation for structural system **300** in **Figure 3** using number of composite structures **2200** in **Figure 22****.** In particular, structural system **2300** includes stringer **2302,** base charge **2304,** skin **2307,** and noodle **2306.** Stringer **2302** is an example of one implementation for composite elongate member **302** shown in block form in **Figure 3****.** Base charge **2304** is an example of one implementation for structure **306** in **Figure 3****,** and noodle **2306** is an example of one implementation for filler structure **2202** in **Figure 22****.**

In this illustrative example, stringer **2302** is a blade stringer. Stringer **2302** has first side **2303** and second side **2305.** Further, stringer **2302** has first section **2308** and second section **2310.** First section **2308** and second section **2310** are part of the same structure in this example. As depicted, first section **2308** is a discontinuous section.

Second section **2310** is positioned relative to first section **2308** such that second section **2310** extends away from first section **2308** in the direction of arrow **2311.** Arrow **2311** has a direction that is substantially perpendicular to first section **2308.**

In this depicted example, second section **2310** meets first portion **2312** of first section **2308** at first location **2314** of second section **2310** and second portion **2316** of first section **2308** at second location **2318** of second section **2310.** First location **2314** has first curved shape **2322.** Second location **2318** has second curved shape **2324.**

In this illustrative example, base charge **2304** is attached to first side **2303** of stringer **2302.** In particular, first surface **2326** of base charge **2304** contacts first side **2303** of first section **2308.** Skin **2307** is attached to second surface **2327** of base charge **2304.** As depicted, first surface **2326** does not come into contact with first side **2303** of second section **2310.**

Noodle **2306** may be inserted into channel **2328.** As depicted, noodle **2306** comprises composite structure **2331.** Composite structure **2331** is an example of one implementation for number of composite structures **2200** in **Figure 22****.** Composite structure **2331** takes the form of one segment in this depicted example. Composite structure **2331** is comprised of composite layers **2332.** Composite layers **2332** are layers of composite material, such as layers **2204** of composite material **2206** in **Figure 22****.**

As illustrated, composite layers **2332** may have widths **2334** that are wider than shape **2330** of channel **2328.** However, widths **2334** may be selected such that composite layers **2332** may shrink to form shape **2333** with a size that substantially conforms to the size of shape **2330** of channel **2328.** In particular, the configuration of composite layers **2332** is selected such that shape **2333** of noodle **2306** substantially conforms to shape **2330** of channel **2328** after noodle **2306** has been cured.

Further, with noodle **2306,** a capacity for stringer **2302** to withstand forces that pull stringer **2302** away from base charge **2304** and/or skin **2307** is increased as compared to when noodle **2306** is absent or when a different type of noodle is present. These forces are in the direction of arrow **2311.**

In this illustrative example, composite layers **2332** for noodle **2306** may have different orientations with respect to an axis (not shown) through stringer **2302.** This axis (not shown) may be through the page and substantially perpendicular to arrow **2311.** In this illustrative example, composite layers **2332** include 34 layers.

Additionally, in this illustrative example, adhesive and/or some other suitable type of material may be used to fill in any gaps or spaces between noodle **2306** and first side **2303** of stringer **2302** at first location **2314** and second location **2318.** In this manner, gaps or spaces in channel **2328** may not be present when stringer **2302,** base charge **2304,** and noodle **2306** are attached together.

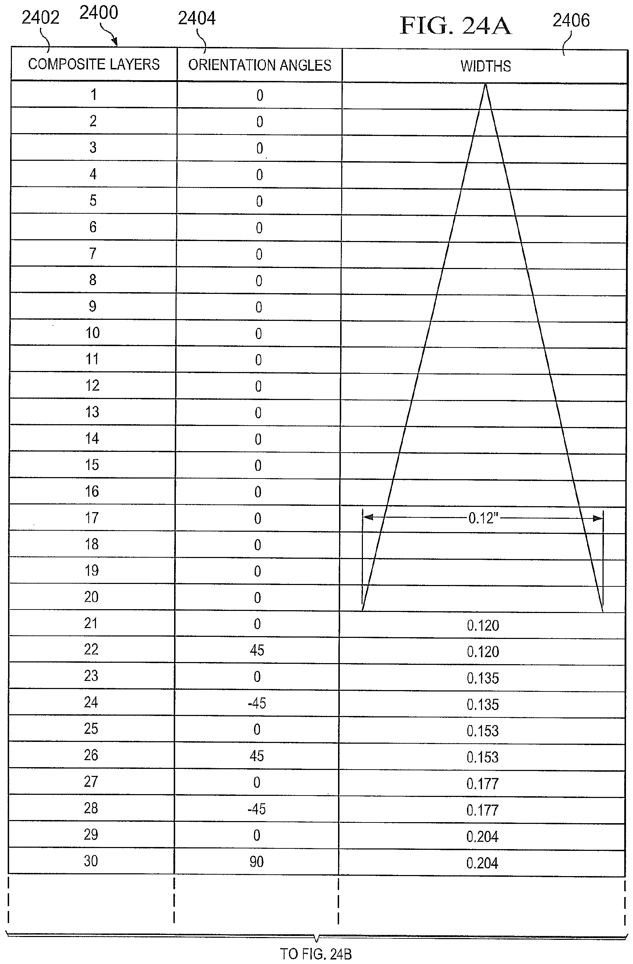

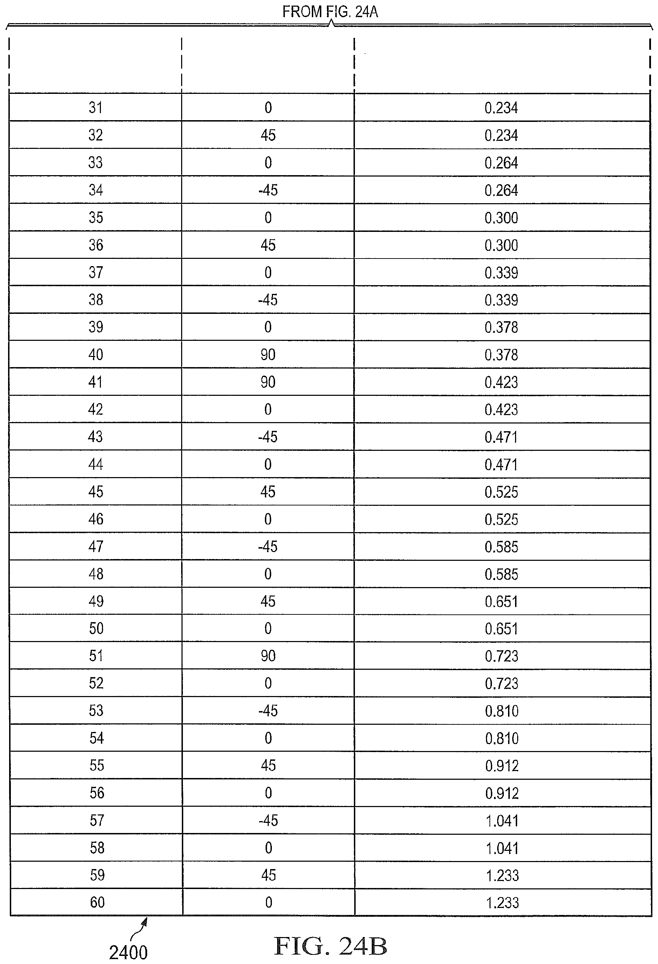

With reference now to **Figures 24A** **and** **24B****,** an illustration of a table of widths and orientation angles for composite layers in a noodle is depicted in accordance with an advantageous example. In this illustrative example, table **2400** includes composite layers **2402,** orientation angles **2404,** and widths **2406.**

As depicted, composite layers **2402** identify the different composite layers in composite layers **2332** within noodle **2306** in **Figure 23****.** Orientation angles **2404** identify the angles in which the fibers for the different composite layers in composite layers **2332** are arranged with respect to the axis (not shown in **Figure 23****)** through stringer **2302.** Further, widths **2406** identify the different widths in widths **2334** for the different composite layers in composite layers **2332.**

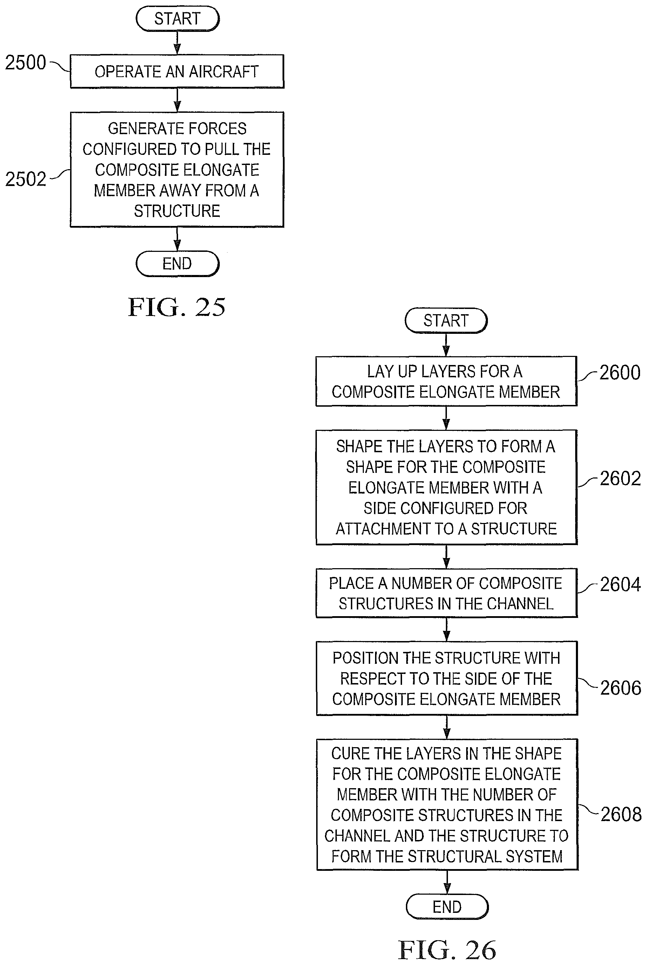

With reference now to **Figure 25****,** an illustration of a flowchart of a process for increasing a pull-off capacity for a composite elongate member is depicted in accordance with an advantageous example. The process illustrated in **Figure 25** may be implemented to increase a pull-off capacity for composite elongate member **302** in **Figure 3****.**

The process begins by operating an aircraft (operation **2500).** In particular, in operation **2500,** the process applies a pressure to the composite elongate member and a structure attached to a side of the composite elongate member. The composite elongate member may be, for example, a stringer. The structure may be, for example, a skin panel.

In response to operation of the aircraft, the process generates forces configured to pull the composite elongate member away from a structure (operation **2502),** with the process terminating thereafter. The forces are in a direction substantially perpendicular to a surface of the structure. In this illustrative example, a channel extends along a length of the composite elongate member on the side of the composite elongate member attached to the structure.

A number of composite structures is configured to attach a portion of the side of the composite elongate member to the structure such that a capacity of the composite elongate member to withstand the forces that pull the composite elongate member away from the structure is increased. The capacity of the composite elongate member to withstand the forces that pull the composite elongate member away from the structure is the pull-off capacity for the composite elongate member.

In this illustrative example, the number of composite structures that attaches the portion of the side of the composite elongate member to the structure may be selected from a number of different configurations. For example, the number of composite structures may have configuration **351** for number of composite structures **304** in **Figure 3****,** configuration **1820** for number of composite structures **1800** in **Figure 18****,** or configuration **2214** for number of composite structures **2200** in **Figure 22****.**

With reference now to **Figure 26****,** an illustration of a flowchart of a process for forming a structural system is depicted in accordance with an advantageous example. The process illustrated in **Figure 26** may be implemented to form structural system **300** in **Figure 3****.**

The process begins by laying up layers for a composite elongate member (operation **2600).** These layers may be, for example, layers of composite material. The composite elongate member may be, for example, a stringer, a stiffener, or some other suitable type of composite elongate member.

The process then shapes the layers to form a shape for the composite elongate member with a side configured for attachment to a structure (operation **2602).** Operation **2602** may be performed by, for example, heating the layers to form the shape for the composite elongate member. The structure may be, for example, a skin panel, a base charge, and/or some other structure having a substantially planar surface. A channel extending along a length of the composite elongate member is present on the side configured for attachment to the structure.

Thereafter, the process places a number of composite structures in the channel (operation **2604).** In operation **2604,** the number of composite structures may have configuration **351** for number of composite structures **304** in **Figure 3****,** configuration **1820** for number of composite structures **1800** in **Figure 18****,** or configuration **2214** for number of composite structures **2200** in **Figure 22****.**

The number of composite structures forms a filler structure that is configured to attach a portion of the side of the composite elongate member to the structure. The number of composite structures increases a capacity of the composite elongate member to withstand forces that pull the composite elongate member away from the structure.

The process then positions the structure with respect to the side of the composite elongate member (operation **2606).** For example, in operation **2606,** the structure may be placed over the composite elongate member such that a surface of the structure directly contacts at least a portion of the side of the composite structure. The process then cures the layers in the shape for the composite elongate member with the number of composite structures in the channel and the structure to form the structural system (operation **2608),** with the process terminating thereafter.

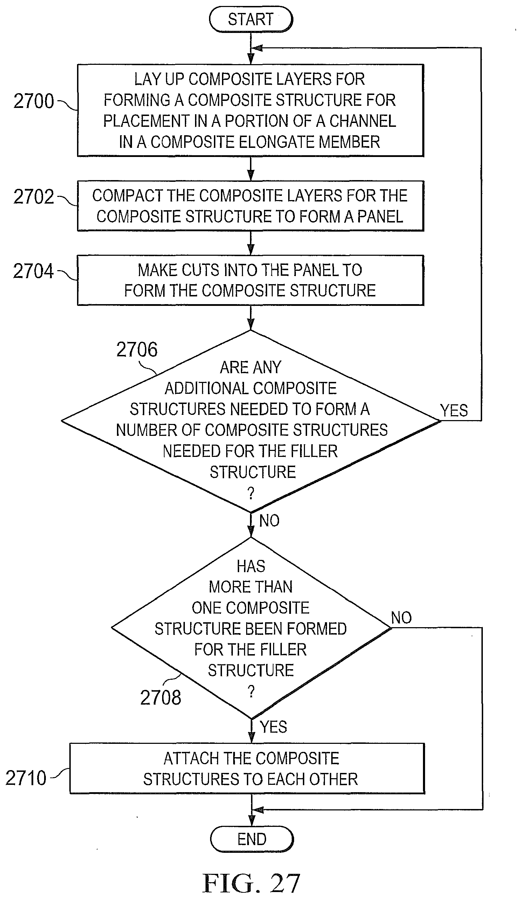

With reference now to **Figure 27****,** an illustration of a flowchart of a process for forming a filler structure is depicted in accordance with an advantageous example. The process illustrated in **Figure 27** may be implemented to form filler structure **336** in **Figure 3****.**

The process lays up composite layers for forming a composite structure for placement in a portion of a channel in a composite elongate member (operation **2700).** The composite structure is for a filler structure to be placed in the channel of the composite elongate member. The composite layers for the composite structure are then compacted to form a panel (operation **2702).** This compaction is performed by applying pressure to the composite layers to form the panel. The panel has a height that is substantially the height desired for the composite structure.

Thereafter, the process makes cuts into the panel to form the composite structure (operation **2704).** In operation **2704,** the cuts may be made at angles selected to form the composite structure having a size and shape that substantially conforms to the corresponding portion of the channel. In some illustrative examples, the cuts may be made such that the size and shape of the composite structure reduces after curing to a size and shape that substantially conforms to the corresponding portion of the channel.

The process then determines whether any additional composite structures are needed to form a number of composite structures needed for the filler structure (operation **2706).** If additional composite structures are not needed, the process determines whether more than one composite structure has been formed for the filler structure (operation **2708).** If more than one composite structure has not been formed for the filler structure, the process terminates. If more than one composite structure has been formed, the process attaches the composite structures to each other (operation **2710),** with the process terminating thereafter. In operation **2710,** the composite structures may be attached to each other in a stacked form, side by side, and/or in some other suitable manner such that an overall shape for the composite structures substantially conforms to the shape of the channel in the composite elongate member.

With reference again to operation **2706,** if additional composite structures are needed for the filler structure, the process returns to operation **2700** as described above to form a new composite structure.

The flowcharts and block diagrams in the different depicted embodiments illustrate the architecture, functionality, and operation of some possible implementations of apparatuses and methods in an advantageous embodiment. In this regard, each block in the flowcharts or block diagrams may represent a module, segment, function, and/or a portion of an operation or step.

In some alternative implementations of an advantageous embodiment, the function or functions noted in the block may occur out of the order noted in the figures. For example, in some cases, two blocks shown in succession may be executed substantially concurrently or the blocks may sometimes be executed in the reverse order, depending upon the functionality involved. Also, other blocks may be added in addition to the illustrated blocks in a flowchart or block diagram.

Thus, the different advantageous embodiments provide a stringer with an increased capacity to withstand forces that may pull the stringer away from another structure to which the stringer is attached. In one advantageous example, a structural system comprises a composite elongate member, a number of composite structures, and a structure. The composite elongate member has a side configured for attachment to the structure and a channel on the side of the composite elongate member. The channel extends along a length of the composite elongate member. The number of composite structures is configured for placement in the channel. Further, the number of composite structures is configured to attach a portion of the side of the composite elongate member to the structure. The number of composite structures is configured to increase a capacity of the composite elongate member to withstand forces that pull the composite elongate member away from the structure.

In another advantageous example, an apparatus comprises a composite elongate member, a channel, and a number of composite structures. The composite elongate member has a side configured for attachment to a structure. The channel is on the side and extends along a length of the composite elongate member. The number of composite structures is configured for placement in the channel and configured to attach a portion of the side of the composite elongate member to the structure. The number of composite structures has layers oriented substantially perpendicular to a surface of the structure configured to increase a capacity of the composite elongate member to withstand forces that pull the composite elongate member away from the structure.

In yet another advantageous example, an apparatus comprises a composite elongate member, a channel, and a number of composite structures. The composite elongate member has a side configured for attachment to a structure. The channel is on the side and extends along a length of the composite elongate member. The number of composite structures is configured for placement in the channel and configured to attach a portion of the side of the composite elongate member to the structure.

In this advantageous example, a composite structure in the number of composite structures comprises layers having different orientations selected to increase a capacity of the composite elongate member to withstand forces that pull the composite elongate member away from the structure. The composite structure may comprise groups of the layers that are 11-0922-EP laid up to form the composite structure. A group in the groups of the layers may have a first layer in which first fibers in the first layers are arranged at an angle of about 0 degrees with respect to an axis through the composite elongate member and a second layer in which second fibers in the second layer are arranged at an angle selected from one of about 45 degrees with respect to the axis through the composite elongate member and about 90 degrees with respect to the axis through the composite elongate member.

In this manner, the different advantageous examples provide a structural system that allows an increased number of intermediate ribs as compared to shear-tied ribs to be used in the wing of an aircraft. Intermediate ribs have a reduced weight as compared to shear-tied ribs. With stringers having an increased capacity to withstand forces that may pull the stringers away from a skin panel to which the stringers are attached, intermediate ribs may be used in addition to and/or in place of shear-tied ribs in a wing to reduce the weight of the wing.

The description of the different advantageous examples has been presented for purposes of illustration and description and is not intended to be exhaustive or limited to the examples in the form disclosed. Many modifications and variations will be apparent to those of ordinary skill in the art without departing from the scope of appended claims Z . Further, different advantageous examples may provide different advantages as compared to other advantageous embodiments. The examples selected are chosen and described in order to best explain the principles of the examples, the practical application, and to enable others of ordinary skill in the art to understand the disclosure for various examples with various modifications as are suited to the particular use contemplated.

## Claims

1. A structural system comprising:
a structure (404);
a composite elongate member (402) having a side (403) attached to a surface (426) of the structure (404);
a channel (428) on the side (403) extending along a length of the composite elongate member (402); and
a number of composite structures (431) configured for placement in the channel (428) and configured to attach a portion of the side (403) of the composite elongate member (402) to the structure (404),
**characterized in that**
the composite elongate member comprises:
a first section (408); and
a second section (410) positioned substantially perpendicular to the first section (408),
wherein the second section (410) meets the first section (408) at a first location (414) of the second section (410) having a first curved shape (422) with a first radius (500) and a second location (418) of the second section (410) having a second curved shape (424) with a second radius (502) in which the first radius (500) and the second radius (502) are substantially equal, and
wherein the first section (408) and the second section (410) are positioned with respect to each other to form the channel (428) between the first location (414) and the second location (418);
wherein the number of composite structures (431) has layers (432) oriented substantially perpendicular to the side (403) of the first section (408) of the composite elongate member (403) and the surface (426) of the structure (404).

2. The structural system of claim 1, wherein the number of composite structures (431) has a shape (433) that substantially conforms to the shape (430) of the channel (428) .

3. The structural system of any preceding claim, wherein a shape (433) of the number of composite structures (431) is formed after curing a laminate comprising the layers (432) for the number of composite structures (431) to form the number of composite structures (431).

4. The structural system of any preceding claim, wherein the number of composite structures comprises:
a first composite structure (602); and
a second composite structure (604), wherein the first composite structure (602) has a first shape (1816) that is symmetrical to a second shape (1818) for the second composite structure (604).

5. The structural system of any preceding claim, wherein the number of composite structures (431) has a first number of characteristics (1819) that substantially matches a second number of characteristics (354) for the composite elongate member (402) such that the capacity of the composite elongate member (402) to withstand the forces that pull the composite elongate member (402) away from the structure (404) increases.

6. The structural system of claim 5, wherein the first number of characteristics (1819) and the second number of characteristics (354) comprise at least one of a coefficient of thermal expansion and a Young's modulus.

7. The structural system of any preceding claim, wherein the number of composite structures (431) comprises layers (432) having a configuration that results in a value for a first Young's modulus for the number of composite structures (431) that substantially matches a value for a second Young's modulus for the composite elongate member (402).

8. The structural system of any preceding claim, wherein the composite elongate member (402) is selected from one of a stringer and a stiffener.

9. The structural system of any preceding claim, wherein the structure (404) is selected from one of a skin panel, a spar, a rib, and a base charge.

10. The structural system of claim 9 or claims 1-7, wherein the composite elongate member (402) is a stringer, a side of the stringer is a first side (403), the structure (404) is a skin panel attached to the first side (426) of the stringer, and a rib is attached to a second side (405) of the stringer that is substantially opposite to the first side (426).

## Patentansprüche

1. Struktursystem, das aufweist:
eine Struktur (404);
ein längliches Verbundteil (402), das eine Seite (403) hat, die an einer Oberfläche (426) der Struktur (404) befestigt ist;
einen Kanal (428) an der Seite (403), der sich entlang einer Länge des länglichen Verbundteils (402) erstreckt;
und
eine Anzahl von Verbundstrukturen (431) die dazu konfiguriert sind, in dem Kanal (428) platziert zu werden, und dazu konfiguriert sind, einen Abschnitt der Seite (403) des länglichen Verbundteils (402) an der Struktur (404) zu befestigen,
**dadurch gekennzeichnet, dass**
das längliche Verbundteil aufweist:
einen ersten Abschnitt (408); und
einen zweiten Abschnitt (410), der im Wesentlichen senkrecht zu dem ersten Abschnitt (408) positioniert ist,
wobei der zweite Abschnitt (410) an einer ersten Stelle (414) des zweiten Abschnitts (410), der eine erste gebogene Form (422) mit einem ersten Radius (500) hat, und an einer zweiten Stelle (418) des zweiten Abschnitts (410), der eine zweite gebogene Form (424) mit einem zweiten Radius (502) hat, auf den ersten Abschnitt (408) trifft, wobei der erste Radius (500) und der zweite Radius (502) im Wesentlichen gleich sind, und
wobei der erste Abschnitt (408) und der zweite Abschnitt (410) in Bezug zueinander positioniert sind, um den Kanal (428) zwischen der ersten Stelle (414) und der zweiten Stelle (418) zu bilden;
wobei die Anzahl von Verbundstrukturen (431) Schichten (432) hat, die im Wesentlichen senkrecht zu der Seite (403) des ersten Abschnitts (408) des länglichen Verbundteils (403) und der Oberfläche (426) der Struktur (404) ausgerichtet sind.

2. Struktursystem nach Anspruch 1, wobei die Anzahl von Verbundstrukturen (431) eine Form (433) hat, die im Wesentlichen mit der Form (430) des Kanals (428) übereinstimmt.

3. Struktursystem nach einem der vorhergehenden Ansprüche, wobei eine Form (433) der Anzahl von Verbundstrukturen (431) nach dem Aushärten eines Laminats gebildet wird, das die Schichten (432) für die Anzahl von Verbundstrukturen (431) aufweist, um die Anzahl von Verbundstrukturen (431) zu bilden.

4. Struktursystem nach einem der vorhergehenden Ansprüche, wobei die Anzahl von Verbundstrukturen aufweist:
eine erste Verbundstruktur (602); und
eine zweite Verbundstruktur (604), wobei die erste Verbundstruktur (602) eine erste Form (1816) hat, die zu einer zweiten Form (1818) für die zweite Verbundstruktur (604) symmetrisch ist.

5. Struktursystem nach einem der vorhergehenden Ansprüche, wobei die Anzahl von Verbundstrukturen (431) eine erste Anzahl von Eigenschaften (1819) hat, die im Wesentlichen mit einer zweiten Anzahl von Eigenschaften (354) für das längliche Verbundteil (402) übereinstimmt, so dass die Fähigkeit des länglichen Verbundteils (402), den Kräften zu widerstehen, die das längliche Verbundteil (402) von der Struktur (404) wegziehen, gesteigert wird.

6. Struktursystem nach Anspruch 5, wobei die erste Anzahl von Eigenschaften (1819) und die zweite Anzahl von Eigenschaften (354) wenigstens eines aufweisen von einem Wärmeausdehnungskoeffizienten und einem Youngschen Modul.

7. Struktursystem nach einem der vorhergehenden Ansprüche, wobei die Anzahl von Verbundstrukturen (431) Schichten (432) aufweist, die eine Konfiguration haben, welche in einem Wert für einen ersten Youngschen Modul für die Anzahl von Verbundstrukturen (431) resultiert, der im Wesentlichen mit einem Wert für einen zweiten Youngschen Modul für das längliche Verbundteil (402) übereinstimmt.

8. Struktursystem nach einem der vorhergehenden Ansprüche, wobei das längliche Verbundteil (402) ausgewählt wird aus einem von einem Stringer und einer Versteifung.

9. Struktursystem nach einem der vorhergehenden Ansprüche, wobei die Struktur (404) ausgewählt wird aus einem von einer Hautplatte, einem Holm, einer Rippe und einem Basiseinsatz.

10. Struktursystem nach Anspruch 9 oder den Ansprüchen 1-7, wobei das längliche Verbundteil (402) ein Stringer ist, eine Seite des Stringers eine erste Seite (403) ist, die Struktur (404) eine Hautplatte ist, die an der erste Seite (426) des Stringers befestigt ist, und eine Rippe an einer zweiten Seite (405) des Stringers befestigt ist, die im Wesentlichen der ersten Seite (426) gegenüberliegt.

## Revendications

1. Système structurel comprenant :
une structure (404) ;
un élément allongé composite (402) présentant un côté (403) fixé à une surface (426) de la structure (404) ;
un canal (428) sur le côté (403) s'étendant le long d'une longueur de l'élément allongé composite (402) ; et
une quantité de structures composites (431) configurées pour leur placement dans le canal (428) et configurées pour fixer une partie du côté (403) de l'élément allongé composite (402) à la structure (404),
**caractérisé en ce que**
l'élément allongé composite comprend :
une première section (408) ; et
une seconde section (410) positionnée sensiblement perpendiculairement à la première section (408),
dans lequel la seconde section (410) rencontre la première section (408) au niveau d'un premier emplacement (414) de la seconde section (41) présentant une première forme courbée (422) avec un premier rayon (500) et un second emplacement (418) de la seconde section (410) présentant une seconde forme courbée (424) avec un second rayon (502) dans lequel le premier rayon (500) et le second rayon (502) sont sensiblement égaux, et
dans lequel la première section (408) et la seconde section (410) sont positionnées l'une par rapport à l'autre pour former le canal (428) entre le premier emplacement (414) et le second emplacement (418) ;
dans lequel la quantité de structures composites (431) présente des couches (432) orientées sensiblement perpendiculairement au côté (403) de la première section (408) de l'élément allongé composite (403) et la surface (426) de la structure (404).

2. Système structurel selon la revendication 1, dans lequel la quantité de structures composites (431) présente une forme (433) qui se conforme sensiblement à la forme (430) du canal (428).

3. Système structurel selon une quelconque revendication précédente, dans lequel une forme (433) de la quantité de structures composites (431) est formée après durcissement d'un laminé comprenant les couches (432) pour la quantité de structures composites (431) afin de former la quantité de structures composites (431).

4. Système structurel selon une quelconque revendication précédente, dans lequel la quantité de structures composites comprend :
une première structure composite (602) ; et
une seconde structure composite (604), la première structure composite (602) présentant une première forme (1816) qui est symétrique à une seconde forme (1818) pour la seconde structure composite (604).

5. Système structurel selon une quelconque revendication précédente, dans lequel la quantité de structures composites (431) présente une première quantité de caractéristiques (1819) qui coïncide sensiblement avec une seconde quantité de caractéristiques (354) pour l'élément allongé composite (402) de telle sorte que la capacité de l'élément allongé composite (402) à résister aux forces qui tirent l'élément allongé composite (402) à distance de la structure (404) augmente.

6. Système structurel selon la revendication 5, dans lequel la première quantité de caractéristiques (1819) et la seconde quantité de caractéristiques (354) comprennent au moins une propriété parmi un coefficient de dilatation thermique et un module de Young.

7. Système structurel selon une quelconque revendication précédente, dans lequel la quantité de structures composites (431) comprend des couches (432) présentant une configuration qui résulte en une valeur pour un premier module de Young pour la quantité de structures composites (431) qui coïncide sensiblement avec une valeur pour un second module de Young pour l'élément allongé composite (402).

8. Système structurel selon une quelconque revendication précédente, dans lequel l'élément allongé composite (402) est choisi parmi une lisse et un raidisseur.

9. Système structurel selon une quelconque revendication précédente, dans lequel la structure (404) est choisie parmi un panneau de revêtement, un longeron, une nervure et une charge de base.

10. Système structurel selon la revendication 9 ou les revendications 1 à 7, dans lequel l'élément allongé composite (402) est une lisse, un côté de la lisse est un premier côté (403), la structure (404) est un panneau de revêtement fixé au premier côté (426) de la lisse, et une nervure est fixée à un second côté (405) de la lisse qui est sensiblement opposé au premier côté (426).
